# EUROPEAN PATENT APPLICATION

(11) **EP 4 113 517 A1**
(43) Date of publication of application: **04.01.2023**
(21) Application number: 22163718.4
(22) Date of filing: 23.03.2022
(51) Int. Cl.: G11B 27/031, G11B 27/036, G11B 27/34

(54) **METHOD AND APPARATUS FOR PROCESSING VIDEOS**

(30) Priority: 29.06.2021 CN 202110726981
(71) Applicant: Beijing Dajia Internet Information Technology Co., Ltd., Beijing 100085 (CN)
(72) Inventor: Wang, Lei, Beijing (CN)
(74) Representative: Yang, Shu

(57) **Abstract**

A method for processing videos is provided. The method includes: displaying (201) video frames in a first video based on a video recording interface in response to a participation instruction for video stitching; determining (202)a target video frame in response to a selection operation on any of the video frames; determining (203; 307) an insertion position of a second video based on the target video frame, and acquiring (203; 307) a target video by stitching the second video and the first video based on the insertion position; and publishing (204; 308) the target video.

## Description

### TECHNICAL FIELD

The present disclosure relates to the field of multimedia technologies, and in particular, relates to a method and apparatus for processing videos.

### BACKGROUND

With the continuous development of multimedia technologies, video-based entertainment functions are constantly enriched. A user can view videos published by a plurality of users on a content sharing platform, download a video in which the user is interested, acquire a stitched video by stitching the downloaded video and his/her own video, and publish the stitched video on the content sharing platform. Other users can view the stitched video and perform video stitching based on the stitched video, thereby achieving an effect of video chains.

During the video stitching, the stitched video is acquired mainly by stitching videos end to end, which results in a single video processing method and poor flexibility and intelligence of the video processing method.

### SUMMARY

The present disclosure provides a method and apparatus for processing videos. The technical solutions of the present disclosure are as follows.

According to an aspect of embodiments of the present disclosure, a method for processing videos is provided. The method includes: displaying video frames in a first video based on a video recording interface in response to a participation instruction for video stitching; determining a target video frame in response to a selection operation on any of the video frames; determining an insertion position of a second video based on the target video frame, and acquiring a target video by stitching the second video and the first video based on the insertion position; and publishing the target video.

According to another aspect of the embodiments of the present disclosure, an apparatus for processing videos is provided. The apparatus includes: a displaying unit, configured to display video frames in a first video based on a video recording interface in response to a participation instruction for video stitching; a determining unit, configured to determine a target video frame in response to a selection operation on any of the video frames; a stitching unit, configured to determine an insertion position of a second video based on the target video frame, and acquire a target video by stitching the second video and the first video based on the insertion position; and a publishing unit, configured to publish the target video.

According to another aspect of the embodiments of the present disclosure, a non-transitory computer-readable storage medium is provided. The storage medium stores one or more instructions, wherein the one or more instructions, when executed by a processor of an electronic device, cause the electronic device to perform: displaying video frames in a first video based on a video recording interface in response to a participation instruction for video stitching; determining a target video frame in response to a selection operation on any of the video frames; determining an insertion position of a second video based on the target video frame, and acquiring a target video by stitching the second video and the first video based on the insertion position; and publishing the target video.

### BRIEF DESCRIPTION OF THE DRAWINGS

The accompanying drawings are incorporated into the specification and constitute a part of the specification, show embodiments that are consistent with the present disclosure, and are used together with the description to explain the principles of the present disclosure, rather than constituting an improper limitation to the present disclosure.
FIG. 1 is a schematic diagram of an implementation environment of a method for processing videos according to an exemplary embodiment;
FIG. 2 is a flowchart of a method for processing videos according to an exemplary embodiment;
FIG. 3 is a flowchart of a method for processing videos according to an exemplary embodiment;
FIG. 4 is a schematic diagram of an interface corresponding to a functional portal of a video stitching function according to an exemplary embodiment;
FIG. 5 is a schematic interface diagram of a participation interface according to an exemplary embodiment;
FIG. 6 is a schematic interface diagram of a list display interface of published videos according to an exemplary embodiment;
FIG. 7 is a schematic interface diagram of a play interface corresponding to a first video according to an exemplary embodiment;
FIG. 8 is a schematic interface diagram of a play interface corresponding to a basic video of a first video according to an exemplary embodiment;
FIG. 9 is a schematic interface diagram of a video display interface according to an exemplary embodiment;
FIG. 10 is a schematic diagram of display forms of video stitching information according to an exemplary embodiment;
FIG. 11 is a schematic interface diagram of a video recording interface according to an exemplary embodiment;
FIG. 12 is a schematic interface diagram of a video recording interface according to an exemplary embodiment;
FIG. 13 is a schematic interface diagram of a video recording interface according to an exemplary embodiment;
FIG. 14 is a schematic interface diagram of a video frame display interface according to an exemplary embodiment;
FIG. 15 is a schematic interface diagram of a video recording interface according to an exemplary embodiment;
FIG. 16 is a schematic interface diagram of a video selection interface according to an exemplary embodiment;
FIG. 17 is a schematic diagram of a display form of third prompt information according to an exemplary embodiment;
FIG. 18 is a schematic diagram of a display form of fourth prompt information according to an exemplary embodiment;
FIG. 19 is a schematic diagram of a display interface of countdown according to an exemplary embodiment;
FIG. 20 is a schematic diagram of an interface during video recording according to an exemplary embodiment;
FIG. 21 is a schematic diagram of an interface in the case that video recording is paused according to an exemplary embodiment;
FIG. 22 is a schematic diagram of an interface after a video clip is deleted according to an exemplary embodiment;
FIG. 23 is a schematic interface diagram of a video editing interface according to an exemplary embodiment;
FIG. 24 is a schematic interface diagram of a video editing interface according to an exemplary embodiment;
FIG. 25 is a schematic interface diagram of a video editing interface according to an exemplary embodiment;
FIG. 26 is a schematic interface diagram of a video editing interface according to an exemplary embodiment;
FIG. 27 is a schematic interface diagram of a video editing interface according to an exemplary embodiment;
FIG. 28 is a schematic interface diagram of a video editing interface according to an exemplary embodiment;
FIG. 29 is a schematic interface diagram of an image processing interface according to an exemplary embodiment;
FIG. 30 is a schematic interface diagram of a music setting interface according to an exemplary embodiment;
FIG. 31 is a schematic interface diagram of a cover setting interface according to an exemplary embodiment;
FIG. 32 is a schematic interface diagram of a video clipping interface according to an exemplary embodiment;
FIG. 33 is a schematic interface diagram of an information setting interface according to an exemplary embodiment;
FIG. 34 is a schematic interface diagram of a target setting interface according to an exemplary embodiment;
FIG. 35 is a schematic diagram of a display form of fifth prompt information according to an exemplary embodiment;
FIG. 36 is a schematic interface diagram of a play interface corresponding to a target video according to an exemplary embodiment;
FIG. 37 is a schematic interface diagram of a sharing interface according to an exemplary embodiment;
FIG. 38 is a schematic diagram of a display form of second notification information according to an exemplary embodiment;
FIG. 39 is a schematic diagram of a display form of first notification information according to an exemplary embodiment;
FIG. 40 is a schematic interface diagram of a sharing interface according to an exemplary embodiment;
FIG. 41 is a block diagram of an apparatus for processing videos according to an exemplary embodiment; and
FIG. 42 is a block diagram of an electronic device according to an exemplary embodiment.

### DETAILED DESCRIPTION

To make those of ordinary skill in the art better understand the technical solutions of the present disclosure, the technical solutions in embodiments of the present disclosure are clearly and completely described in the following with reference to the accompanying drawings.

It should be noted that the terms "first," "second," and the like in the specification and claims, as well as the above-mentioned accompanying drawings of the present disclosure are used to distinguish similar objects, but not used to describe a specific order or precedence order. It should be understood that data used in this way may be interchanged where appropriate, such that the embodiments of the present disclosure described herein can be implemented in a sequence other than those illustrated or described herein. The implementations described in the following exemplary embodiments are not all the embodiments consistent with the present disclosure. On the contrary, these embodiments are merely examples of apparatuses and methods consistent with some aspects of the present disclosure as detailed in the appended claims.

In addition, data (such as videos) involved in the present disclosure is data authorized by users or fully authorized by all parties.

During the video stitching in related art, the stitched video is acquired mainly by stitching videos end to end, which results in a single video processing method and poor flexibility and intelligence of the video processing method due to this limited approach of editing the video.

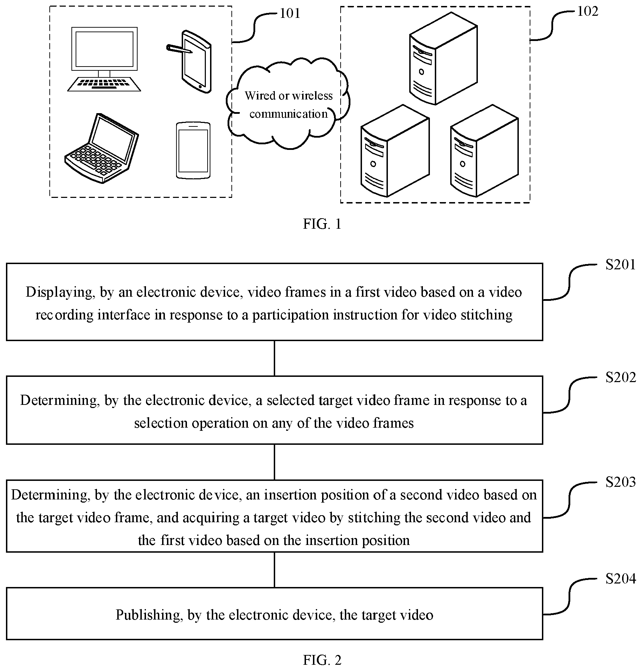

FIG. 1 is a schematic diagram of an implementation environment of a method for processing videos according to an exemplary embodiment. As shown in FIG. 1, the implementation environment includes an electronic device 101 and a server 102.

The electronic device 101 may be at least one of a smartphone, a smart watch, a tablet computer, a Moving Picture Experts Group audio layer III (MP3) player, a Moving Picture Experts Group audio layer IV (MP4) player, a portable laptop computer, and the like. The electronic device 101 is connected with the server 102 through wired or wireless communication, which is not limited in the embodiments of the present disclosure. The electronic device 101 is internally or externally connected with a camera assembly, such that a user can acquire a video by using the camera assembly, the acquired video can be sent to the server 102, and the video can be published to a content sharing platform through the server 102. Alternatively, the electronic device 101 stores at least one video and a video can be selected by the user from the at least one video, the electronic device 101 sends the selected video to the server 102 in response to the user's selection operation, and the server 102 publishes the video to the content sharing platform. In some embodiments, the electronic device 101 can further provide a video editing function, such that the user can process a video (for example, perform cropping or beautifying on the video) through the video editing function, and then send an edited video to the server 102 to publish the edited video.

The electronic device 101 is one of a plurality of electronic devices. The electronic device 101 is merely used as an example for description in the embodiments. A person skilled in the art may understand that there may be more or fewer electronic devices 101. For example, there may be a few electronic devices 101, or there may be dozens or hundreds of electronic devices 101, or more electronic devices 101. The number and types of the electronic devices 101 are not limited in the embodiments of the present disclosure.

The server 102 is at least one of a server, a plurality of servers, a cloud server, a cloud computing platform, and a virtualization center. The server 102 is connected with the electronic device 101 through wired or wireless communication, which is not limited in the embodiments of the present disclosure. The server 102 receives a video sent by the electronic device 101, and then publishes the received video to the content sharing platform, such that a plurality of users can view the video. In some embodiments, there may be more or fewer servers, which is not limited in the embodiments of the present disclosure. In some embodiments, the server 102 may also include other functional servers to provide more comprehensive and diverse services.

FIG. 2 is a flowchart of a method for processing videos according to an exemplary embodiment. As shown in FIG. 2, the method is executed by an electronic device and includes the following processes.

In S201, the electronic device displays video frames in a first video based on a video recording interface in response to a participation instruction for video stitching.

In S202, the electronic device determines a selected target video frame in response to a selection operation on any of the video frames.

In S203, the electronic device determines an insertion position of a second video based on the target video frame and acquires a target video by stitching the second video and the first video based on the insertion position.

In S204, the electronic device publishes the target video.

In the solutions provided by the embodiments of the present disclosure, a function through which a user can select a target video frame by himself/herself is provided, such that the user can select a stitching joint for video stitching by himself/herself, and then a target video is acquired by stitching a clip of a first video and a second video based on the target video frame selected by the user, enriching video processing methods and improving flexibility and intelligence of video processing.

In some embodiments, displaying the video frames in the first video based on the video recording interface includes any one of: displaying each of the video frames in the first video based on the video recording interface; and displaying a candidate video frame in the first video based on the video recording interface, wherein the first video includes a plurality of stitched videos, and the candidate video frame is any video frame in each of the stitched videos in the first video.

In some embodiments, determining the insertion position of the second video based on the target video frame, and acquiring the target video by stitching the second video and the first video based on the insertion position includes: in the case that each of the video frames in the first video is displayed in the video recording interface, determining the target video frame as the insertion position, cropping the first video based on the target video frame, and acquiring the target video by stitching the second video behind the cropped first video.

In some embodiments, determining the insertion position of the second video based on the target video frame, and acquiring the target video by stitching the second video and the first video based on the insertion position includes any one of: in the case that the candidate video frame in the first video is displayed in the video recording interface, determining a start video frame of the stitched video corresponding to the target video frame as the insertion position, and inserting the second video in front of the target video frame; and in the case that the candidate video frame in the first video is displayed in the video recording interface, determining an end video frame of the stitched video corresponding to the target video frame as the insertion position, and inserting the second video behind the target video frame.

In some embodiments, displaying the video frames in the first video based on the video recording interface includes: displaying a first video frame in the first video in the video recording interface, wherein the first video frame is any video frame in the first video; and displaying the video frames in the first video in the video recording interface in response to a trigger operation on the first video frame.

In some embodiments, displaying the video frames in the first video based on the video recording interface includes: displaying a first video frame in the first video in the video recording interface, wherein the first video frame is any video frame in the first video; displaying a video frame display interface in response to a trigger operation on the first video frame; and displaying the video frames in the first video in the video frame display interface.

In some embodiments, the method further includes: displaying operation guide information, wherein the operation guide information is configured to guide the user to participate in the video stitching.

In some embodiments, the method further includes any one of: canceling a display of the operation guide information in response to a display duration of the operation guide information reaching a first target duration; and canceling a display of the operation guide information in response to a trigger operation on any position.

In some embodiments, determining the selected target video frame in response to the selection operation on any of the video frames includes: displaying a sliding window on the video frames in the first video; and determining, in response to a drag operation on the sliding window, a video frame in the sliding window at the end of the drag operation as the target video frame.

In some embodiments, a floating window is displayed in the video recording interface, wherein the floating window is configured to play the first video; and the method further includes: displaying a playing progress identifier on the video frame in the first video, wherein the playing progress identifier is configured to indicate a video frame being played currently in the first video.

In some embodiments, a video selection control is displayed in the video recording interface; and prior to determining the insertion position of the second video based on the target video frame, and acquiring the target video by stitching the second video and the first video based on the insertion position, the method further includes: displaying at least one candidate video in response to a trigger operation on the video selection control, and determining a selected candidate video as the second video.

In some embodiments, a video recording control is displayed in the video recording interface; and prior to determining the insertion position of the second video based on the target video frame, and acquiring the target video by stitching the second video and the first video based on the insertion position, the method further includes: recording the second video in response to a trigger operation on the video recording control.

In some embodiments, recording the second video in response to the trigger operation on the video recording control includes: acquiring at least one of background music and special effect information of the first video; and recording the second video based on at least one of the background music and special effect information of the first video.

In some embodiments, in the case that a duration of the background music of the first video is less than a recording duration of the second video, the background music of the first video is looped.

In some embodiments, a music setting control is further displayed in the video recording interface; and the method further includes: displaying a use cancellation control in response to a trigger operation on the music setting control; and canceling, in response to a trigger operation on the use cancellation control, a use of the background music of the first video in the case that the second video is recorded.

In some embodiments, recording the second video in response to the trigger operation on the video recording control includes: displaying a countdown in response to the trigger operation on the video recording control; and recording the second video at the end of the countdown.

In some embodiments, a floating window is displayed in the video recording interface, wherein the floating window is configured to play the first video; and prior to recording the second video at the end of the countdown, the method further includes: playing a video clip whose duration is matched with the duration of the countdown in the floating window during the countdown, wherein the video clip is a video clip located in front of the target video frame in the first video.

In some embodiments, upon playing the video clip, whose duration is matched with the duration of the countdown, in the floating window during the countdown, the method further includes: canceling a display of the floating window at the end of the countdown.

In some embodiments, upon displaying the floating window in response to the trigger operation on the video recording control, the method further includes: displaying, in response to a move operation on the floating window, the floating window at a position that corresponds to an end position of the move operation.

In some embodiments, a fold control is displayed in the floating window; and the method further includes: displaying the floating window in a folded form in response to a trigger operation on the fold control.

In some embodiments, the method further includes: canceling a display of the first video frame in the first video in response to the trigger operation on the video recording control, wherein the first video frame is any of the video frames in the first video.

In some embodiments, upon displaying the countdown in response to the trigger operation on the video recording control, the method further includes: displaying a recording pause control at the end of the countdown; and displaying the first video frame in the first video and a second video frame in the second video in response to a trigger operation on the recording pause control; wherein the first video frame is any of the video frames in the first video, and the second video frame is any of the video frames in the second video.

In some embodiments, the method further includes: displaying a delete control in response to the trigger operation on the recording pause control; and deleting, in response to a trigger operation on the delete control, a video clip recorded after the recording pause control is triggered last time from the second video.

In some embodiments, upon recording the second video in response to the trigger operation on the video recording control, the method further includes any one of: displaying a recording completion control in response to the recording duration of the second video reaching a second target duration, and displaying a video editing interface of the target video in response to a trigger operation on the recording completion control, wherein the video editing interface includes an edit control for editing the first video and the second video in the target video; and displaying the video editing interface of the target video in response to the recording duration of the second video reaching a third target duration.

In some embodiments, the edit control includes a clip control; and the method further includes: displaying a video clipping interface of the target video in response to a trigger operation on the clip control, wherein the video clipping interface is configured to display video frames in the first video and the second video in the target video; wherein in the case that the video clipping interface displays the video frames in the target video, the video frames in the first video and the video frames in the second video are distinguishingly displayed.

In some embodiments, upon displaying the video clipping interface in response to the trigger operation on the clip control, the method further includes one of: in the case that a clip operation is performed in the video clipping interface, and a video clip corresponding to the clip operation includes all video frames in the first video, displaying first prompt information, wherein the first prompt information is configured to prompt that all video frames in the first video cannot be deleted; and in the case that the clip operation is performed in the video clipping interface, and the video clip corresponding to the clip operation includes all video frames in the second video, displaying second prompt information, wherein the second prompt information is configured to prompt that it is not allowed to delete all video frames in the second video.

In some embodiments, the video editing interface further includes a progress display control, wherein the progress display control is configured to adjust playing progress of the target video.

In some embodiments, the video editing interface further includes an editing completion control; and publishing the target video includes: displaying a publishing interface in response to a trigger operation on the editing completion control; and publishing the target video in response to a publishing operation on the publishing interface.

In some embodiments, publishing the target video in response to the publishing operation on the publishing interface includes: acquiring publishing setting information of the target video, wherein the publishing setting information includes target setting information, the target setting information being configured to indicate whether video stitching is allowed to be performed based on the target video; and publishing the target video based on the publishing setting information in response to the publishing operation on the publishing interface.

In some embodiments, upon determining the insertion position of the second video based on the target video frame, and acquiring the target video by stitching the second video and the first video based on the insertion position, the method further includes: in the case that a duration of the target video exceeds a predetermined duration, acquiring a video whose duration is matched with the predetermined duration by clipping the target video.

In some embodiments, upon publishing the target video, the method further includes: displaying the target video and a tag of the target video, wherein the tag is configured to indicate that the target video is a video acquired by stitching the published videos.

In some embodiments, upon publishing the target video, the method further includes: displaying a play interface corresponding to the target video, wherein the play interface corresponding to the target video includes a share control; and sending first notification information in response to a trigger operation on the share control, wherein the first notification information is configured to invite a user to participate in the video stitching.

In some embodiments, upon publishing the target video, the method further includes: displaying the play interface corresponding to the target video, wherein the play interface corresponding to the target video includes a participate control for the video stitching; and participating in the video stitching in response to a trigger operation on the participate control.

In some embodiments, the participate control includes a first participate control and a second participate control; and participating in the video stitching in response to the trigger operation on the participate control may include one of: triggering to invite the user to participate in the video stitching in response to a trigger operation on the first participate control; and triggering the participation instruction for video stitching in response to a trigger operation on the second participate control.

In some embodiments, the play interface corresponding to the target video further includes a video viewing portal; and the method further includes: displaying a play interface corresponding to the first video in response to a trigger operation on the video viewing portal.

In some embodiments, the play interface corresponding to the target video includes video stitching information. The video stitching information includes any one of: in the case that an associated user participates in the video stitching, the video stitching information is first information, wherein the first information is configured to indicate that an associated user participates in the video stitching; in the case that a number of users participating in the video stitching reaches a target threshold, the video stitching information is second information, wherein the second information is configured to indicate the number of users participating in the video stitching; and in the case that no associated user participates in the video stitching, and the number of users participating in the video stitching does not reach the target threshold, the video stitching information is third information, wherein the third information is configured to indicate that the played video is acquired by stitching the published videos; wherein the associated user is a user associated with a user who triggers the participation instruction for video stitching.

In some embodiments, the method further includes: displaying a video display interface in response to a trigger operation on the video stitching information, wherein the video display interface is configured to display a video published based on video stitching.

In some embodiments, prior to displaying the video frames in the first video based on the video recording interface in response to the participation instruction for video stitching, the method further includes: displaying at least one video; displaying a participation interface in response to a trigger operation on the first video among the at least one video, wherein the participation interface is configured to play the first video and includes a video making control; and triggering the participation instruction for video stitching in response to a trigger operation on the video making control.

In some embodiments, the method further includes: displaying second notification information, wherein the second notification information is configured to notify that a user performs video stitching based on the target video.

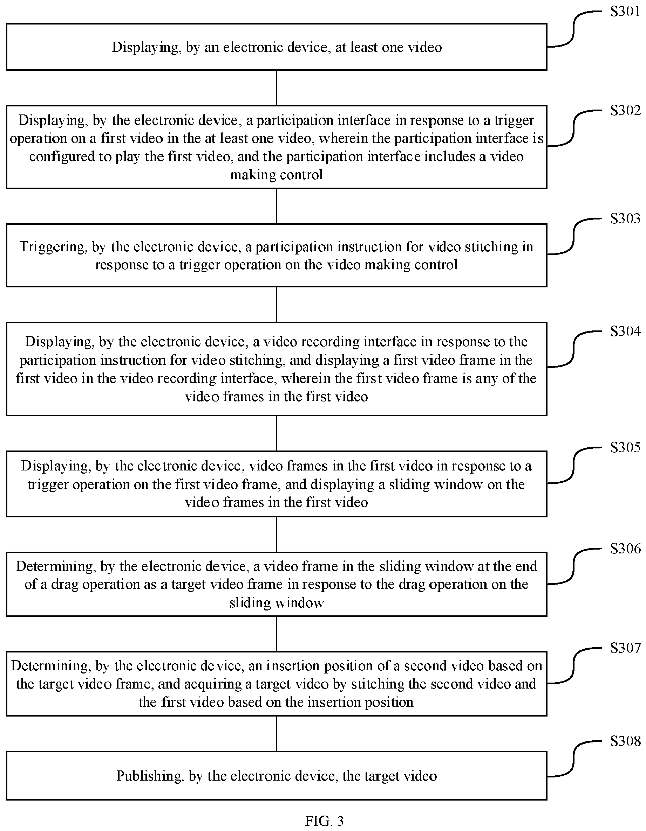

FIG. 2 shows only a basic flow of the method for processing videos provided by the present disclosure. The following further describes the method for processing videos provided in the present disclosure based on a specific implementation process. FIG. 3 is a flowchart of a method for processing videos according to an exemplary embodiment. As shown in FIG. 3, the method is executed by an electronic device and includes the following processes.

In S301, the electronic device displays at least one video.

In the case that video stitching is performed based on a video stitching function, the video stitching is performed based on an initial video based on which video stitching can be performed. The initial video is a template video acquired from a server or is a recorded and published video by a user, which is not limited in the embodiments of the present disclosure. Other users can acquire the initial video through an electronic device, perform video stitching based on the initial video, and publish a stitched video. Still other users can view the newly published stitched video, perform video stitching based on the stitched video, and publish a stitched video. No matter how many times video stitching is performed, a video acquired by each video stitching process includes content of the initial video, such that overlapped content exists between videos published based on the video stitching function, thereby achieving an effect of video chains.

In some embodiments, the electronic device displays a functional portal of the video stitching function, a user triggers the functional portal of the video stitching function, and the electronic device displays the at least one video in response to the trigger operation on the functional portal of the video stitching function. The at least one video is a template video for video stitching.

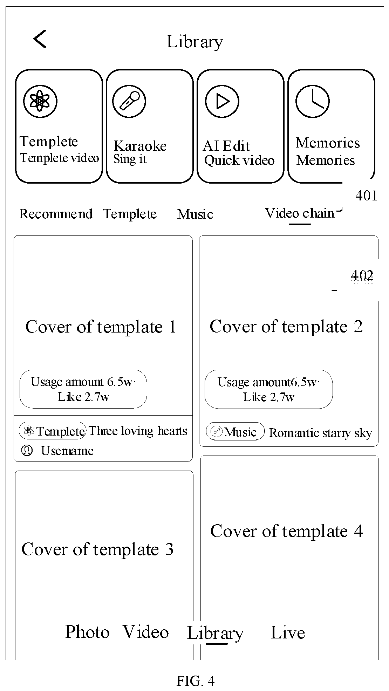

Referring to FIG. 4, FIG. 4 is a schematic interface diagram corresponding to a functional portal of a video stitching function according to an exemplary embodiment. In the interface shown in FIG. 4, a video chain portal 401 is the functional portal of the video stitching function. The user triggers the video chain portal 401. The electronic device displays the interface shown in FIG. 4 in response to the user's trigger operation on the video chain portal 401. Works displayed in the interface shown in FIG. 4 are covers of a plurality of template works based on which video stitching can participate. The user can participate in video stitching by triggering a cover of any one of the template works.

In S302, the electronic device displays a participation interface in response to a trigger operation on a first video in the at least one video, wherein the participation interface is configured to play the first video and includes a video making control.

The first video is any one of the at least one video.

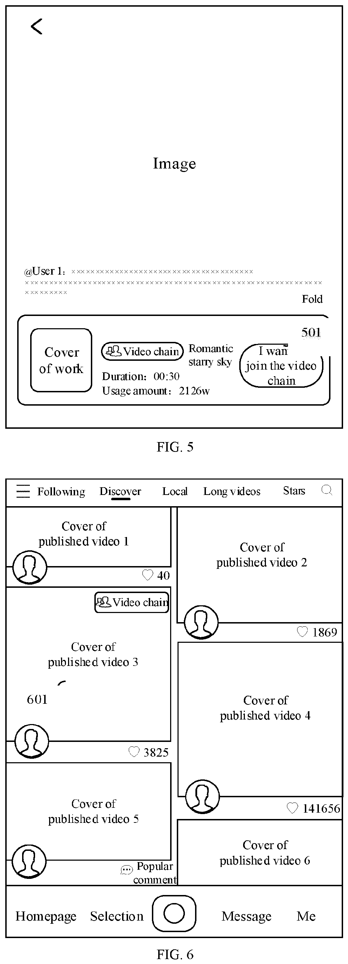

In some embodiments, the participation interface may refer to FIG. 5. FIG. 5 is a schematic interface diagram of a participation interface according to an exemplary embodiment. In combination with the interface shown in FIG. 4, in the case that the user triggers a cover 402 of a template work 2 in the interface shown in FIG. 4, the electronic device displays the participation interface shown in FIG. 5 in response to the trigger operation of the user. The electronic device plays the first video in the participation interface, such that the user can view the first video through the participating interface and determine whether to participate in the video stitching by performing video stitching based on the first video.

The participation interface shown in FIG. 5 includes the video making control, namely, an "I want to join the video chain" button 501. In the case that the user determines to perform video stitching based on the first video, the user performs video stitching by triggering the "I want to join the video chain" button 501.

In S303, the electronic device triggers a participation instruction for video stitching in response to the trigger operation on the video making control.

The participation interface shown in FIG. 5 is still used as an example. In the case that the user triggers the "I want to join the video chain" button 501 in the participation interface shown in FIG. 5, the electronic device triggers the participation instruction for video stitching in response to the trigger operation of the user, such that the user can participate in the video stitching.

In S301 to S303, the functional portal of the video stitching function is provided, such that the user can view the first video capable of being subjected to video stitching in the participation interface through the functional portal and participate in the video stitching through the video making control in the participation interface, enriching video processing methods and improving flexibility of video processing.

The above S301 to S303 are described by taking that the user triggers the participation instruction for video stitching through the functional portal of the video stitching function as an example. In some other embodiments, there are other ways to trigger the participation instruction for video stitching.

In some embodiments, the electronic device displays a list display interface of published videos, and a plurality of published videos are displayed in the list display interface. The plurality of published videos include the first video, wherein the first video is a video published based on video stitching. In the case that the first video is displayed, the electronic device displays a tag of the first video. The user can know from the tag that the first video is a stitched video acquired by performing video stitching based on published videos. The user triggers the first video. The electronic device displays a play interface corresponding to the first video in response to the trigger operation on the first video. The play interface corresponding to the first video includes a participate control for video stitching. The participate control includes a second participate control. The user triggers the second participate control. The electronic device triggers the participation instruction for video stitching in response to the trigger operation on the second participate control.

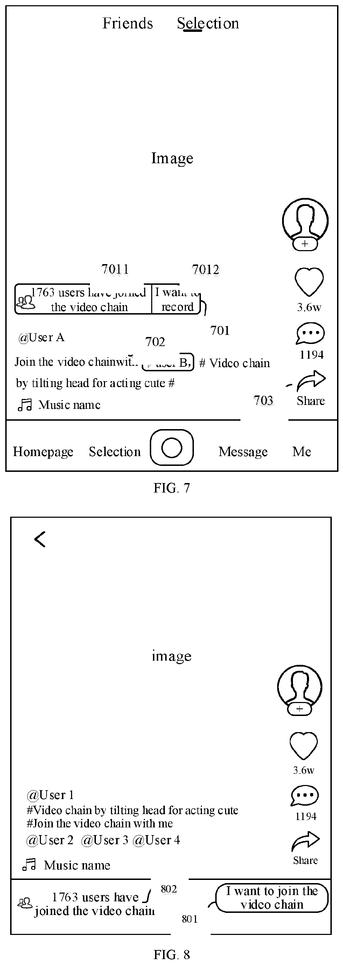

Referring to FIG. 6, FIG. 6 is a schematic interface diagram of a list display interface of published videos according to an exemplary embodiment. A plurality of published videos are displayed in the list display interface shown in FIG. 6. A tag is displayed in an upper-right comer of a published video 3 with a reference numeral 601 in the plurality of published videos. It can be determined based on the displayed tag that the published video 3 with the reference numeral 601 is a stitched video acquired by performing video stitching based on published videos. The user triggers the published video 3 with the reference numeral 601, and the electronic device displays an interface shown in FIG. 7 in response to the trigger operation of the user. FIG. 7 is a schematic interface diagram of a play interface corresponding to a first video according to an exemplary embodiment. The play interface shown in FIG. 7 includes a control 701. The control 701 includes two parts. An "I want to record" button 7012 included in the control 701 is the second participate control, and the user can trigger the participation instruction for video stitching by triggering the "I want to record" button 7012.

The second participate control 7012 of the video stitching function is provided in the play interface corresponding to the first video, such that the user can participate in the video stitching and make a target video by triggering the second participate control. The operation is simple, and man-machine interaction efficiency is improved.

The play interface corresponding to the first video further includes a video viewing portal, which can provide a function of viewing a basic video of the first video for the user. The basic video of the first video is a video used as a stitching basis of the first video. In other words, the first video is acquired by stitching the basic video and other videos. The user triggers the video viewing portal, and the electronic device displays a play interface corresponding to the basic video of the first video in response to the trigger operation on the video viewing portal.

Still taking the play interface corresponding to the first video shown in FIG. 7 as an example, in the play interface shown in FIG. 7, a control 702 is the video viewing portal. The user triggers the control 702, and the electronic device displays an interface shown in FIG. 8 in response to the trigger operation of the user. FIG. 8 is a schematic interface diagram of a play interface corresponding to a basic video of a first video according to an exemplary embodiment. After displaying the play interface shown in FIG. 8, the electronic device plays the basic video of the first video in the play interface shown in FIG. 8, such that the user can view the basic video of the first video in the play interface shown in FIG. 8.

The video viewing portal is provided in the play interface corresponding to the first video, such that the user can view the basic video used as the stitching basis of the first video through the video viewing portal, improving the flexibility of the video processing.

For the play interface corresponding to the basic video of the first video, the play interface corresponding to the basic video of the first video also includes the participate control. The user can also trigger the participation instruction for video stitching through the participate control in the play interface corresponding to the basic video of the first video, the specific process of which is the same as the corresponding content described above, and details are not repeated herein.

The play interface shown in FIG. 8 is still used as an example. In the play interface shown in FIG. 8, an "I want to join the video chain" button 801 is the participate control. The user can trigger the participation instruction for video stitching by triggering the "I want to join the video chain" button 801.

The participate control is also provided in the play interface corresponding to the basic video of the first video, such that the user can also trigger the participation instruction for video stitching based on the play interface corresponding to the basic video of the first video to participate in the video stitching, improving the flexibility of the video processing.

In addition, both the play interface corresponding to the first video and the play interface corresponding to the basic video of the first video includes video stitching information, such that the user can view all videos published based on the video stitching function through the video stitching information. In some embodiments, the user triggers the video stitching information, and the electronic device displays a video display interface in response to the trigger operation on the video stitching information, wherein the video display interface is configured to display the videos published based on video stitching.

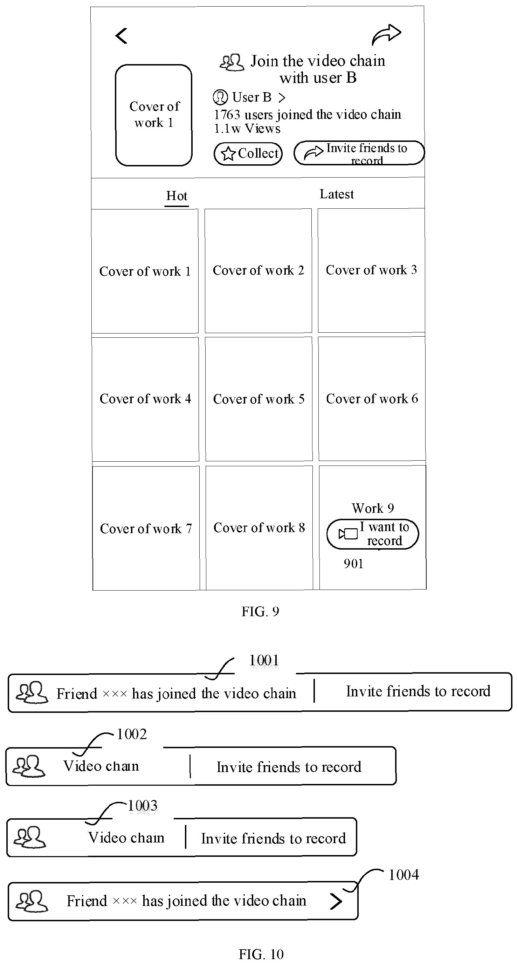

The play interface shown in FIG. 7 and the play interface shown in FIG 8 are still used as examples. In the play interface shown in FIG. 7, a "1763 users have joined the video chain" part 7011 included in the control 701 is the video stitching information. In the play interface shown in FIG. 8, "1763 users have joined the video chain" with a reference numeral 802 is the video stitching information. In the case that the user triggers the "1763 users have joined the video chain" part 7011 or "1763 users have joined the video chain" with the reference numeral 802, an interface shown in FIG. 9 is displayed. FIG. 9 is a schematic interface diagram of a video display interface according to an exemplary embodiment. A plurality of videos published based on the video stitching function are displayed in the video display interface shown in FIG. 9, and the user can trigger any video for viewing.

The video stitching information is provided in both the play interface corresponding to the first video and the play interface corresponding to the basic video of the first video, which increases the amount of information of the video processing. In addition, the video display interface is displayed in the case that the video stitching information is triggered, such that the user can view the videos published based on video stitching in the video display interface. The operation is simple, man-machine interaction efficiency is high, and the flexibility of the video processing can be improved.

Either the video stitching information displayed in the play interface corresponding to the first video or the video stitching information displayed in the play interface corresponding to the basic video of the first video has a plurality of display forms. The following describes three possible display forms.

In the case that an associated user participates in the video stitching, the video stitching information is first information, wherein the first information is configured to indicate that an associated user participates in the video stitching.

In the case that a number of users participating in the video stitching reaches a target threshold, the video stitching information is second information, wherein the second information is configured to indicate the number of users participating in the video stitching.

In the case that no associated user participates in the video stitching, and the number of users participating in the video stitching does not reach the target threshold, the video stitching information is third information, wherein the third information is configured to indicate that the played video is a video acquired by stitching the published videos.

In some embodiments, in the case that the associated user participates in the video stitching, and the number of users participating in the video stitching reaches the target threshold, the video stitching information is the first information.

The associated user is a user associated with a user who triggers the participation instruction for video stitching. In other words, the associated user is a user who has an association relationship with the user who triggers the participation instruction for video stitching. The association relationship includes a friend relationship, a follow relationship, a relationship of mutual interaction operations (such as mutually likes or mutually comments), or the like, which is not limited in the embodiments of the present disclosure. The target threshold is any positive integer, a value of which is not limited in the embodiments of the present disclosure.

The play interface shown in FIG. 7 and the play interface shown in FIG. 8 are still used as examples. Both the "1763 users have joined the video chain " part 7011 in FIG. 7 and "1763 users have joined the video chain " with the reference numeral 802 in FIG. 8 are the second information. Taking display forms of the video stitching information in the play interface corresponding to the first video as an example, referring to FIG. 10, FIG. 10 is a schematic diagram of display forms of video stitching information according to an exemplary embodiment. As shown in FIG. 10, "Friend ××× has joined the video chain" with a reference numeral 1001 is the first information, and "Video chain" with a reference numeral 1002 and "Video chain" with a reference numeral 1003 are the third information.

The video stitching information is determined based on an actual participation situation of the video stitching, which makes different participation situations correspond to different video stitching information, and improves the flexibility of the video processing.

It should be noted that FIG. 10 also shows a different form of the participate control. Referring to FIG. 10, the participate control can alternatively be provided in a form shown by a control 1004. In some other embodiments, the participate control may be in more other forms, a specific form of which is not limited in the embodiments of the present disclosure.

The form of the video stitching information displayed in the play interface corresponding to the first video is the same as that in the play interface corresponding to the basic video of the first video, and in some other embodiments, the video stitching information displayed in the play interface corresponding to the first video is different from that in the play interface corresponding to the basic video of the first video, which is not limited in the embodiments of the present disclosure.

The above S301 to S303 provide only several exemplary ways for triggering the participation instruction for video stitching. In some other embodiments, there are more possible ways. For example, the video display interface may further include a participate control (as shown in FIG. 9, an "I want to record" button 901 is the participate control), the user can also trigger the participation instruction for video stitching by triggering the participate control in the video display interface.

In some embodiments, an electronic device corresponding to the current user receives first notification information sent by an electronic device corresponding to other users and displays the first notification information, wherein the first notification information is configured to invite the current user to participate in the video stitching. The current user triggers the first notification information, and the electronic device corresponding to the current user displays a video play interface including a participate control in response to the user's trigger operation on the first notification information, such that the current user can trigger the participation instruction for video stitching by triggering the participate control. A specific way to trigger the participation instruction for video stitching is not limited in the embodiments of the present disclosure.

In S304, the electronic device displays a video recording interface in response to the participation instruction for video stitching, and displays a first video frame in the first video in the video recording interface, wherein the first video frame is any video frame in the first video.

The first video frame is any video frame in the first video. For example, the first video frame is a cover video frame of the first video or another video frame in the first video, which is not limited in the embodiments of the present disclosure.

In some embodiments, the first video frame in the first video is displayed in a thumbnail form. In other words, a thumbnail of the first video frame in the first video is displayed in the video recording interface. In some other embodiments, the first video frame may be displayed in another way, which is not limited in the embodiments of the present disclosure.

The thumbnail of the first video frame has a small amount of data. Therefore, displaying the first video frame in the thumbnail form can reduce the processing pressure of the electronic device during the video processing process and improve the video processing rate of the video processing.

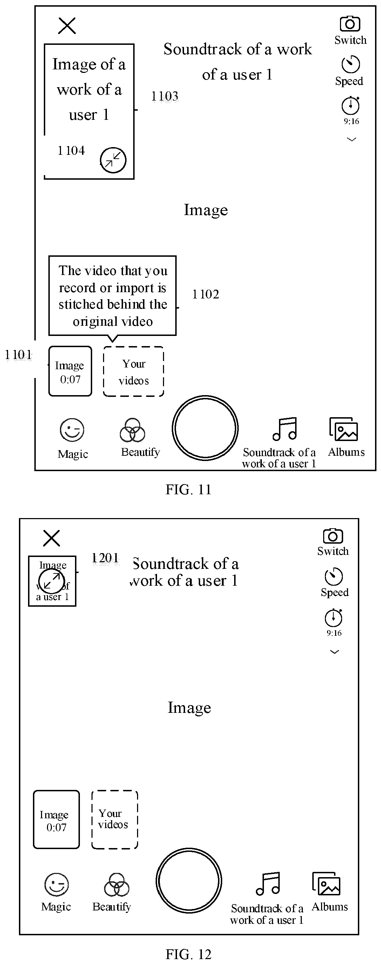

The first video frame is any video frame in the first video. Referring to FIG. 11, FIG. 11 is a schematic interface diagram of a video recording interface according to an exemplary embodiment. The electronic device displays the video recording interface shown in FIG. 11 in response to the participation instruction for video stitching, and displays a first video frame 1101 in the first video in the thumbnail form in a lower-left corner of the video recording interface shown in FIG. 11.

The display position of the first video frame in FIG. 11 is merely an example for description. In some other embodiments, the first video frame may be displayed below a "Magic" button and a "Beautify" button. The display position of the first video frame is not limited in the embodiments of the present disclosure.

In some embodiments, the electronic device displays operation guide information in the case that the video recording interface is displayed, wherein the operation guide information is configured to guide the user to participate in the video stitching. In some embodiments, the operation guide information is configured to inform the user the insertion position of the second video relative to the target video frame. Still taking the video recording interface shown in FIG. 11 as an example, information "The video that you record or import is stitched behind the original video" 1102 in the video recording interface shown in FIG. 11 is the operation guide information.

Displaying the operation guide information enables the user to know how to perform video processing (e.g., know how to select an insertion position) based on the operation guide information, increases the amount of information contained in the video processing to facilitate the user's editing on the video, and improves the intelligence of the video processing.

To prevent a display of the operation guide information from affecting the video recording process of the user, the following two ways to cancel the display of the operation guide information are provided.

In some embodiments, the display of the operation guide information is canceled in the case that a display duration of the operation guide information reaches a first target duration. The first target duration is any duration, which is not limited in the embodiments of the present disclosure. For example, the first target duration is 3.5 seconds.

In some other embodiments, the display of the operation guide information is canceled in response to a trigger operation on any position.

Two ways of canceling the display of the operation guide information are provided, which makes the operation guide information not affect operations of the user in subsequent video processing, and improves the intelligence of video processing.

In some embodiments, in the case that the electronic device displays the video recording interface, a floating window is displayed in the video recording interface, and the first video is played in the floating window.

Still taking the video recording interface shown in FIG. 11 as an example, a floating window 1103 is displayed in an upper-left corner of the video recording interface shown in FIG. 11, such that the first video can be played through the floating window 1103.

The floating window configured to play the first video is provided in the video recording interface, which enables the user to view the first video in the video recording interface and perform video recording based on content of the first video, increasing the amount of information contained in the video processing and improving the flexibility of the video processing.

In some embodiments, the floating window can be moved. In the case that the user moves the floating window in the video recording interface, the electronic device displays, in response to the move operation, the floating window at a position corresponding to an end position of a move operation on the floating window.

The floating window can be moved, which enables the user to adjust a display position of the floating window according to actual needs, and improves the flexibility of the video processing.

In some embodiments, a fold control may be displayed in the floating window and the user can fold a display of the floating window through the fold control. In the case that the user triggers the fold control, the floating window is displayed in a folded form in response to a trigger operation on the fold control.

Still Taking the video recording interface shown in FIG. 11 as an example, a control 1104 in the floating window 1103 in the video recording interface shown in FIG. 11 is the fold control. In the case that the user triggers the control 1104, an interface shown in FIG. 12 is displayed. Referring to FIG. 12, FIG. 12 is a schematic interface diagram of a video recording interface according to an exemplary embodiment. In the video recording interface shown in FIG. 12, a floating window 1201 is displayed in the folded form.

The fold control is provided in the floating window, which enables the user to fold the display of the floating window by triggering the fold control, and improves the flexibility of the video processing.

In S305, the electronic device displays video frames in the first video in response to a trigger operation on the first video frame, and displays a sliding window on the video frames in the first video.

In some embodiments, the electronic device displays the video frames in the first video in the video recording interface in response to the trigger operation on the first video frame.

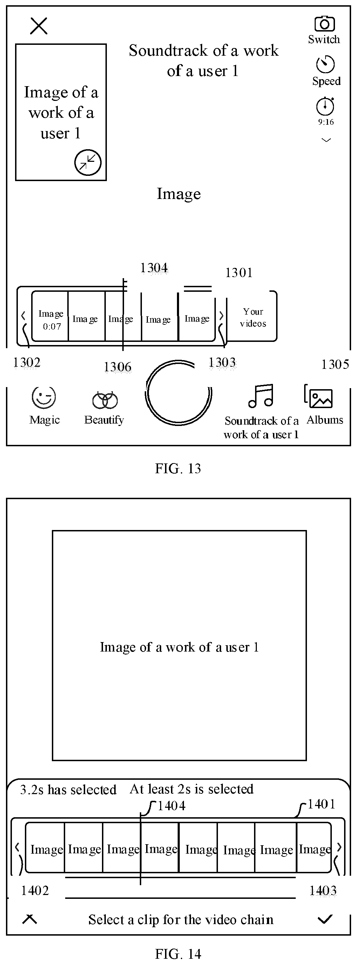

Referring to FIG. 13, FIG. 13 is a schematic interface diagram of a video recording interface according to an exemplary embodiment. In combination with the interface shown in FIG. 11, in the case that the user triggers the first video frame 1101 in the first video in the interface shown in FIG. 11, the electronic device expands and displays the video frames in the first video in the video recording interface in response to the trigger operation of the user.

Any one of the video frames (namely, the first video frame) in the first video is first displayed in the video recording interface, and then in response to the first video frame being triggered, the video frames in the first video are expanded and displayed. The operation is simple, and the man-machine interaction efficiency is high. In the case that the video frames are expanded and displayed, the user can view the video frames in the first video, and then select a target video frame for determining an insertion position.

In some other embodiments, the electronic device displays a video frame display interface in response to the trigger operation on the first video frame, wherein the video frames in the first video are displayed in the video frame display interface.

Referring to FIG. 14, FIG. 14 is a schematic interface diagram of a video frame display interface according to an exemplary embodiment. In combination with the interface shown in FIG. 11, in the case that the user triggers the first video frame 1101 in the first video in the interface shown in FIG. 11, the electronic device displays the video frame display interface shown in FIG. 14 in response to the trigger operation of the user, such that the video frames in the first video are displayed in the video frame display interface.

Any one of the video frames (namely, the first video frame) in the first video is first displayed in the video recording interface, and then in the case that the first video frame is triggered, the video frame display interface is displayed, such that the video frames in the first video are expanded and displayed in the video frame display interface. The operation is simple, and the man-machine interaction efficiency is high. In the case that the video frames are expanded and displayed, the user can view the video frames in the first video, and then select a target video frame for determining an insertion position from the video frames.

There are the following two optional ways to display the video frames in the first video.

In some embodiments, the electronic device displays each of the video frames in the first video in the video recording interface.

In some other embodiments, the electronic device displays a candidate video frame in the first video in the video recording interface, wherein the first video includes a plurality of stitched videos, and the candidate video frame is any video frame in each of the stitched videos in the first video. In other words, the first video is formed by stitching a plurality of stitched videos. In response to displaying the video frames in the first video, the electronic device randomly selects a video frame from each stitched video as the candidate video frame, and then displays the plurality of selected candidate video frames. The any video frame is a cover video frame of each stitched video or another video frame, which is not limited in the embodiments of the present disclosure.

Two ways for displaying the video frames in the first video are provided to enrich possible implementations of video processing and improve the flexibility of the video processing.

In the case that the video frames are displayed, the video frames are displayed in the thumbnail form. In other words, a thumbnail of each of the video frames in the first video is displayed, or a thumbnail of the candidate video frame in the first video is displayed. In some other embodiments, the video frames in the first video are displayed in another way, which is not limited in the embodiments of the present disclosure.

The thumbnails of the video frames have a small amount of data. Therefore, displaying the video frames in the first video in the thumbnail form can reduce the processing pressure of the electronic device during video processing and improve the processing rate of video processing.

In some embodiments, in the case that the video frames in the first video are displayed, the electronic device is playing the first video in the floating window in the video recording interface, and then the electronic device displays a playing progress identifier on a video frame in the first video, wherein the playing progress identifier is configured to indicate a video frame being played currently in the first video.

The playing progress identifier is displayed on the video frame in the first video based on a playing progress of the first video in the floating window, which presents dynamic information of the first video information and enables the user to know which video frame in the first video is being played in the current interface through the playing progress identifier. In the same user interface, the multiple video frames in the first video are presented along with the video playing in the floating window. The correspondence of the displayed video frames with the currently played video is indicated by the playing progress identifier, which helps the user to select the target video frame based on a video playing situation, which facilitates the user to edit the video or stitch the video by himself/herself. Rather than video stitching by a single approach (i.e., end to end stitching), the embodiments of the present disclosure enable the user to edit video or stitch video easily by providing information/features guiding the video stitching process in addition to providing controls for selecting a stitch joint, which improves the human machine interaction and the intelligence of the video processing.

In both of the above two ways to display the video frames in the first video, in the case that the sliding window is displayed, the sliding window can be displayed on the video frames in the first video.

For the way to directly display the video frames in the first video in the video recording interface, still taking the video recording interface shown in FIG. 13 as an example, a control 1301 shown in FIG. 13 is the sliding window. For the way to display the video frames in the first video in the video frame display interface, still taking the video frame display interface shown in FIG. 14 as an example, a control 1401 shown in FIG. 14 is the sliding window. The sliding window is a control configured to enable the selection of any of the displayed video frames.

In S306, the electronic device determines, in response to a drag operation on the sliding window, a video frame in the sliding window at an end of the drag operation as the target video frame.

In some embodiments, in response to the drag operation on the sliding window, the electronic device determines a video frame which is at an end of the sliding window at the end of the drag operation as the target video frame. In some other embodiments, a video frame located at another position in the sliding window is determined as the target video frame, which is not limited in the embodiments of the present disclosure.

The sliding window includes a left-sliding control and a right-sliding control. The user performs the drag operation on the sliding window by performing a sliding operation on the left-sliding control or the right-sliding control. The sliding operation includes left sliding operation and right sliding operation.

Taking the video recording interface shown in FIG. 13 as an example, a control 1302 in FIG. 13 is left-sliding control and a control 1303 is right-sliding control. Taking the video frame display interface shown in FIG. 14 as an example, a control 1402 in FIG. 14 is the left-sliding control and a control 1403 is the right-sliding control.

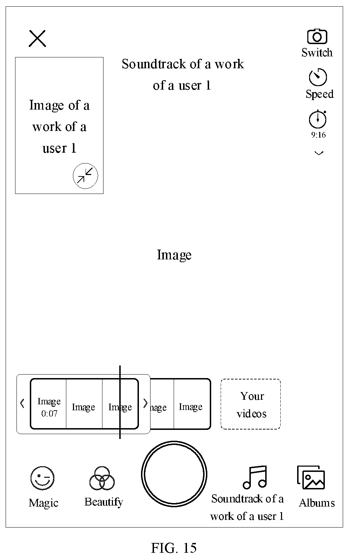

Still taking the video recording interface shown in FIG. 13 as an example, in the case that the user slides the right-sliding control 1303 in the sliding window 1301 to the left in the video recording interface shown in FIG. 13, the electronic device displays an interface shown in FIG. 15 in response to the sliding operation of the user. Referring to FIG. 15, FIG. 15 is a schematic interface diagram of a video recording interface according to an exemplary embodiment. In the video recording interface shown in FIG. 15, a right-sliding control in the sliding window is moved by two video frames to the left relative to the right-sliding control in the sliding window in the video recording interface shown in FIG. 13, which implements the drag operation on the sliding window.

In S305 to S306, the sliding window is displayed on the video frames in the first video, such that the user can select any of the displayed video frames as the target video frame used as the stitching joint by dragging the sliding window. The target frame may be a frame between any two of the displayed video frames or may be a last frame or a first frame of the displayed video frames. Thus, a user has a control on the stitching joint and can generate a desired video and the stitching can be more creative. The operation of selecting a target video frame is simple, and the man-machine interaction efficiency is high.

The method for selecting the target video frame through the sliding window in S305 to S306 is merely exemplary. In some other embodiments, other methods may be used to select the target video frame, which is not limited in the embodiments of the present disclosure.

In some embodiments, after the electronic device displays the video recording interface, the first video is played in the floating window in the video recording interface. In the case that the user performs a series of operations such as triggering the first video frame and dragging the sliding window, the first video played in the floating window is still being played, and the electronic device displays a playing progress identifier on the video frame in the first video, wherein the playing progress identifier is configured to indicate a video frame being played currently in the first video.

Taking the video recording interface shown in FIG. 13 as an example, a control 1304 in FIG. 13 is the playing progress identifier. Taking the video frame display interface shown in FIG. 14 as an example, a control 1404 in FIG. 14 is the playing progress identifier.

The playing progress identifier is displayed on the video frame in the first video, which enables the user to determine which video frame in the first video is being played in the current interface through the playing progress identifier and select the target video frame based on a video playing situation, and improves the intelligence of the video processing.

In S307, the electronic device determines an insertion position of a second video based on the target video frame, and acquires the target video by stitching the second video and the first video based on the insertion position.

In some embodiments, in the case that each of the video frames in the first video is displayed in the video recording interface, the electronic device determines the target video frame as the insertion position, acquires a cropped first video by cropping the first video based on the target video frame, and acquires the target video by stitching the second video behind the cropped first video. During the cropping process of the first video based on the target video frame, video frames behind the target video frame are deleted to acquire the cropped first video.

In the case that each of the video frames in the first video is displayed in the video recording interface, the video frames behind the target video frame are cropped, and the second video is stitched behind the target video frame to acquire the target video. Therefore, the user can freely select the joint for video stitching, improving the intelligence and flexibility of the video processing.

In some other embodiments, in the case that the candidate video frame in the first video is displayed in the video recording interface, the electronic device determines a start video frame of a stitched video corresponding to the target video frame as the insertion position, and inserts the second video in front of the target video frame. In other words, in the case that the candidate video frame corresponding to each of the stitched videos is displayed in the video recording interface, after determining the target video frame, the electronic device directly inserts the second video in front of the stitched video corresponding to the target video frame to acquire the target video.

Alternatively, in the case that the candidate video frame in the first video is displayed in the video recording interface, the electronic device determines an end video frame of the stitched video corresponding to the target video frame as the insertion position, and inserts the second video behind the target video frame. In other words, in the case that the candidate video frame corresponding to each of the stitched videos in the first video is displayed in the video recording interface, after determining the target video frame, the electronic device directly inserts the second video behind the stitched video corresponding to the target video frame to acquire the target video.

In the case that the candidate video frame in the first video is displayed in the video recording interface, the second video is inserted in front of or behind the stitched video corresponding to the target video frame to achieve stitching of the first video and the second video, which improves the intelligence and flexibility of the video processing.

After inserting the second video behind the target video frame, the electronic device deletes the stitched video behind the second video; or after inserting the second video behind the target video frame, the electronic device retains the stitched video behind the second video, which is not limited in the embodiments of the present disclosure.

The duration of the target video is less than or equal to a predetermined duration, and the predetermined duration is any duration, which is not limited in the embodiments of the present disclosure. For example, the predetermined duration is 15 minutes. In some embodiments, in the case that the duration of the target video exceeds the predetermined duration, the electronic device acquires a video whose duration is matched with the predetermined duration by clipping the target video.

In the case that the duration of the target video exceeds the predetermined duration, the target video is automatically clipped to ensure that the duration of the target video is matched with the predetermined duration, which improves the intelligence of the video processing.

The second video is selected by the user from stored videos or recorded by the user. The following describes the two methods for acquiring the second video.

For the first method for acquiring the second video, in some embodiments, a video selection control is displayed in the video recording interface, and the user can view the stored videos through the video selection control, and then select the second video from the stored videos. The electronic device displays at least one candidate video in response to a trigger operation on the video selection control. The user performs a selection operation on the at least one candidate video, and the electronic device determines the selected candidate video as the second video in response to the selection operation of the user.

Still taking the video recording interface shown in FIG. 13 as an example, in the video recording interface shown in FIG. 13, an album portal 1305 is the video selection control. It should be noted that in the video recording interface shown in FIG. 11, FIG. 12, or FIG. 15, a form of the video selection control is the same as the form of the video selection control in the video recording interface shown in FIG. 13, details of which are not repeated herein.

The video selection control is provided in the video recording interface, such that the user can select the second video from the at least one candidate video by triggering the video selection control. The operation is simple, the user does not need to manually record a video, and the man-machine interaction efficiency is improved.

In response to displaying the at least one candidate video, the electronic device displays a video selection interface in response to the trigger operation on the video selection control. The at least one candidate video is displayed in the video selection interface, and the at least one candidate video is at least one video stored in the electronic device.

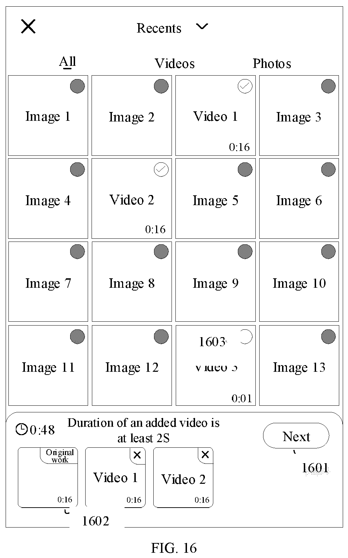

Referring to FIG. 16, FIG. 16 is a schematic interface diagram of a video selection interface according to an exemplary embodiment. In combination with the video recording interface shown in FIG. 13, in the case that the user triggers the album portal 1305 in the video recording interface shown in FIG. 13, the electronic device displays the video selection interface shown in FIG. 16 in response to the trigger operation on the album portal 1305. Image and video stored in the electronic device are displayed in the video selection interface. In the case that the images are displayed, a select control (located in an upper-right corner of each image) corresponding to each image cannot be selected, and a select control (located in an upper-right corner of each video cover) corresponding to each video can be selected, such that the user can determine which videos can be selected based on the select controls, and select the video.

In some embodiments, the video selection interface includes a complete control. In the case that the user completes the selection, the complete control is triggered, and the electronic device acquires the second video selected by the user in response to the user's trigger operation on the complete control.

Still taking the video selection interface shown in FIG. 16 as an example, in the video selection interface shown in FIG. 16, a "Next" button 1601 is the complete control.

The complete control is provided in the video selection interface, such that a subsequent interface is displayed through the complete control after the user completes the video selection. The operation is simple, and the man-machine interaction efficiency is high.

In some embodiments, the electronic device can also detect an operation of the user, and prompt the user in the case that the operation of the user does not meet a requirement.

For example, the video selection interface further displays a first video as a basic video. In the case that the user triggers the first video, the electronic device displays third prompt information in response to the user's trigger operation on the first video, wherein the third prompt information is configured to prompt that the first video cannot be previewed.

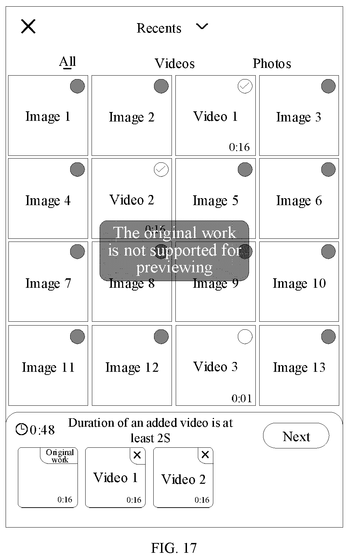

Still taking the video selection interface shown in FIG. 16 as an example, in the video selection interface shown in FIG. 16, in the case that the user triggers a first video 1602, the electronic device displays the third prompt information in the video selection interface in response to the trigger operation of the user. Referring to FIG. 17, FIG. 17 is a schematic diagram of a display form of third prompt information according to an exemplary embodiment. "The original work is not supported for previewing" in FIG. 17 is the third prompt information.

The third prompt information is displayed in the case that the user triggers the first video, such that the user knows that the first video cannot be previewed, increasing the amount of information contained in the video processing.

For another example, a duration of the candidate video selected by the user needs to be greater than or equal to a fourth target duration, and the fourth target duration is any duration, which is not limited in the embodiments of the present disclosure. In the case that the duration of the candidate video selected by the user is less than the fourth target duration, the electronic device displays fourth prompt information in response to the selection operation of the user, wherein the fourth prompt information is configured to prompt that the duration of the selected candidate video does not meet a duration requirement.

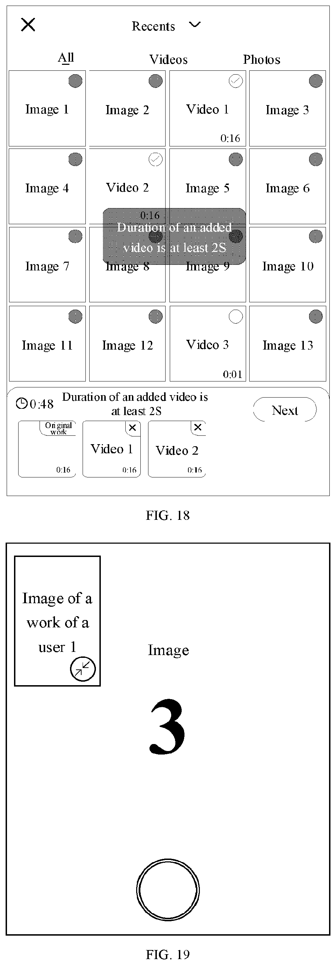

Still taking the video selection interface shown in FIG. 16 as an example, in the video selection interface shown in FIG. 16, in the case that the user triggers a select control 1603 of a video 3, the electronic device displays the fourth prompt information in the video selection interface in response to the trigger operation of the user. Referring to FIG. 18, FIG. 18 is a schematic diagram of a display form of fourth prompt information according to an exemplary embodiment. "Duration of an added video is at least 2S" in FIG. 18 is the fourth prompt information.

In the case that the user triggers a select control corresponding to a video whose duration does not meet the requirement, the fourth prompt information is displayed, which enables the user to know that the video selected by himself/herself does not meet the duration requirement and adjust in time, and increases the amount of information contained in the video processing.

For the second method for acquiring the second video, in some embodiments, a video recording control is displayed in the video recording interface, and the user can record the second video by himself/herself through the video recording control. The electronic device records the second video in response to the trigger operation on the video recording control.

Still taking the video recording interface shown in FIG. 13 as an example, in the video recording interface shown in FIG. 13, a recording button 1306 is the video recording control. It should be noted that in the video recording interface shown in FIG. 11, FIG. 12, or FIG. 15, a form of the video recording control is the same as the form of the video recording control in the video recording interface shown in FIG. 13, details of which are not repeated herein.

The video recording control is provided in the video recording interface, such that the user can record the second video by himself/herself by triggering the video recording control, increasing the diversity of the video processing process, and improving the flexibility of the video processing.

In some embodiments, for recording the second video, the electronic device displays a countdown in response to the trigger operation on the video recording control, and records the second video at the end of the countdown.

Referring to FIG. 19, FIG. 19 is a schematic diagram of a display interface of countdown according to an exemplary embodiment. In FIG. 19, a countdown of 3 seconds is used as an example for description. In some other embodiments, the countdown may be another duration, which is not limited in the embodiments of the present disclosure.

The countdown is first displayed in the case that the video recording control is triggered, and the video starts to be recorded at the end of the countdown, such that the user can be reminded through the countdown, thereby improving the man-machine interaction efficiency and increasing the intelligence of the video processing.

In some embodiments, the electronic device plays a video clip whose duration is matched with the duration of the countdown in the floating window during the countdown, wherein the video clip is a video clip in front of the target video frame in the first video, and cancels the display of the floating window at the end of the countdown.

The video clip whose duration is matched with the duration of the countdown in the first video is played in the floating window during the countdown, such that the user can make corresponding preparations based on the played clip while waiting for recording. The display of the floating window is automatically canceled at the end of the countdown, such that the user does not need to manually operate, that is, the display of the floating window from affecting the video recording process can be avoided, the man-machine interaction efficiency is high, and the intelligence of the video processing is high.

In the case that the duration of the video clip in front of the target video frame in the first video is less than the duration of the countdown, the electronic device starts to play the video clip at a time where a remaining duration of the countdown reaches the duration of the video clip, such that at the end of the countdown, the video clip is completely played, improving the intelligence of the video processing.

During the recording process of the second video, there is no need to display the first video frame in the first video. In other words, the electronic device cancels a display of the first video frame in the first video in response to the trigger operation on the video recording control. Still taking the interface shown in FIG. 19 as an example, in the interface shown in FIG. 19, the electronic device does not need to display the first video frame in the first video in the lower-left corner of the video recording interface as in FIG. 11 and FIG. 12. In other words, in the interface shown in FIG. 19, the display of the first video frame in the first video is canceled. The display of the first video frame in the first video is automatically canceled at the beginning of the video recording, such that the user does not need to manually operate, that is, the impact of the video recording process can be avoided, the man-machine interaction efficiency is high, and the intelligence of the video processing is high.

Alternatively, during the recording process of the second video, the electronic device continues to display the first video frame in the first video, which is not limited in the embodiments of the present disclosure.

In some embodiments, during the video recording process, the electronic device replaces the recording button in the video recording interface with a recording pause button. For example, at the end of the countdown, a recording pause control is displayed, such that the user can pause the recording of the second video through the recording pause control. The user triggers the recording pause control, and the electronic device displays the first video frame in the first video and a second video frame in the second video in response to the trigger operation on the recording pause control, wherein the first video frame is any one of video frames in the first video, and the second video frame is any one of video frames in the second video.

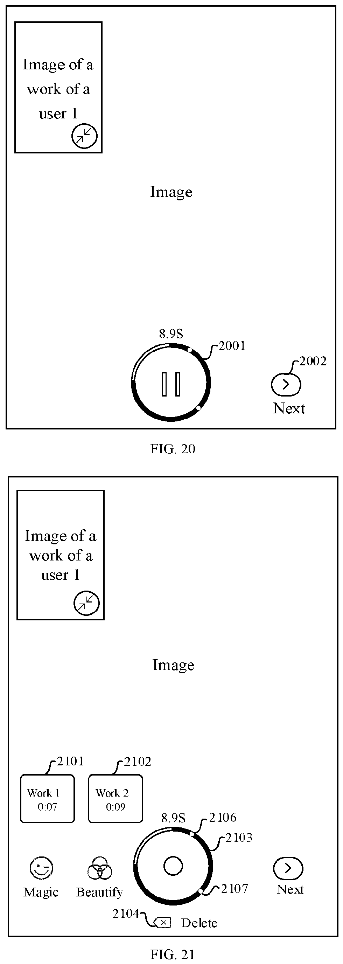

Referring to FIG. 20, FIG. 20 is a schematic diagram of an interface during video recording according to an exemplary embodiment. In the interface shown in FIG. 20, a control 2001 is the recording pause control. The electronic device displays an interface shown in FIG. 21 in response to a trigger operation on the control 2001. Referring to FIG. 21, FIG. 21 is a schematic diagram of an interface in the case that video recording is paused according to an exemplary embodiment. A first video frame 2101 in the first video and a second video frame 2102 in the second video are displayed in a lower-left corner of the interface shown in FIG. 21.

The recording pause control is provided during the recording, such that the user can pause the recording of the second video by triggering the recording pause control, improving the flexibility of the video recording. In the case that the recording is paused, the first video frame in the first video and the second video frame in the second video that the user has recorded are displayed, such that the user knows in time that the video recorded by himself/herselfis successfully acquired, increasing the amount of information contained in the video processing and improving the intelligence of the video processing.

The first video frame in the first video and the second video frame in the second video are displayed in the thumbnail form. In other words, thumbnails of the first video frame in the first video and the second video frame in the second video are displayed.

In some embodiments, in the case that the user triggers the recording pause control, in response to pausing the recording of the second video, the electronic device displays a recording resumption control at the position of the recording pause control, such that the user can continue the recording of the second video.

Still taking the interface in the case that the video recording is paused shown in FIG. 21 as an example, in the interface shown in FIG. 21, a control 2103 is the recording resumption control.

In some embodiments, a delete control can be further provided for the user, such that the user can delete an unsatisfactory clip recorded by the user during the recording. The electronic device displays the delete control in response to the trigger operation on the recording pause control. The user triggers the delete control, and the electronic device deletes a video clip recorded after the recording pause control is triggered last time from the second video in response to the trigger operation on the delete control.

In the case that the user triggers the recording pause control, the electronic device records a timestamp for the pause of the recording in response to the trigger operation of the user. Based on the above, deleting the video clip recorded after the recording pause control is triggered last time from the second video includes: acquiring, by the electronic device, a target timestamp with the smallest interval from the current time, and deleting a video clip from the target timestamp to the current time.

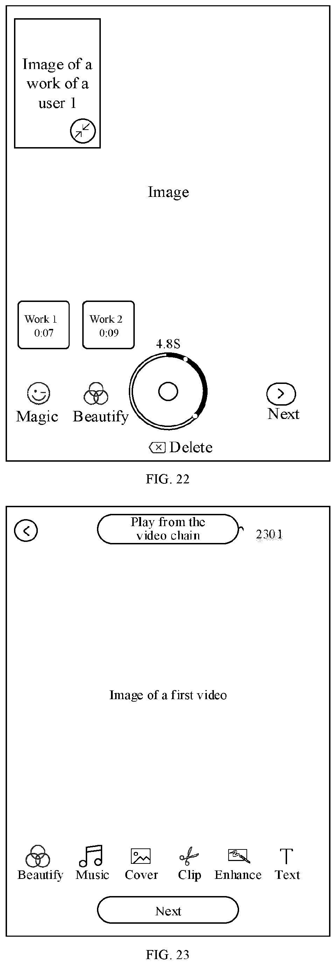

Still taking the interface in the case that the video recording is paused shown in FIG. 21 as an example, in the interface shown in FIG. 21, a delete button 2104 is the delete control. Current video recording progress is displayed on control 2103 which serves as the recording resumption control, and the duration (8.9 seconds) of the currently recorded video is displayed above the control 2103. Timestamps (time points at which the user pauses the video recording during the video recording process) recorded by the electronic device are further displayed on the video recording progress, which are positions with reference numerals 2106 and 2107 in FIG. 21. In the case that the user triggers the control 2104 serving as the delete control in the interface shown in FIG. 21, the electronic device displays an interface shown in FIG. 22 in response to the trigger operation of the user. Referring to FIG. 22, FIG. 22 is a schematic diagram of an interface after a video clip is deleted according to an exemplary embodiment. The electronic device deletes the video clip from the target timestamp to the current time. Correspondingly, the duration of the currently recorded video becomes 4.8 seconds, and the video recording progress is shortened.

The delete control is provided during the video recording process, which enables the user to delete a clip that is latest recorded from the last time the recording is paused by triggering the delete control. The operation is simple, and the man-machine interaction efficiency is improved. In addition, a function through which the user can delete video clips in real-time based on a recording situation during the recording process is provided, which improves the flexibility of the video processing.

During the recording process of the second video, at least one of the background music and special effect information of the first video is reused. The electronic device acquires at least one of the background music and special effect information of the first video, and records the second video based on at least one of the background music and special effect information of the first video.

For example, the electronic device acquires the background music of the first video and records the second video based on the background music of the first video; or, the electronic device acquires the special effect information of the first video and records the second video based on the special effect information of the first video; or, the electronic device acquires at least one of the background music and special effect information of the first video, and records the second video based on at least one of the background music and special effect information of the first video.

In other words, during the recording process of the second video, the background music and/or special effect information of the first video are/is used as background music and/or special effect information of the second video, to achieve an effect of reusing the background music and/or special effect information.

In the case that the special effect information of the first video is acquired, the last special effect information of the first video is acquired, such that the second video is recorded based on the last special effect information of the first video. Alternatively, other methods may be used, which are not limited in the embodiments of the present disclosure.

The second video is recorded based on at least one of the background music and/or special effect information of the first video, such that the second video and the first video are more consistent in style and background music, which ensures an effect of the target video acquired by stitching. In addition, the second video automatically reuses the background music and special effect information of the first video, such that the user does not need to manually select background music and/or special effect information. Therefore, the operation is simple and the man-machine interaction efficiency is improved.

In some embodiments, the video recording interface further includes a music setting control. The user can cancel a use of the background music of the first video as the background music of the second video through the music setting control. The user triggers the music setting control, and the electronic device displays a use cancellation control in response to the trigger operation on the music setting control. In response to a trigger operation on the use cancellation control, during the recording process of the second video, the use of the background music of the first video is cancelled.

Still taking the video recording interface shown in FIG. 11 as an example, in the video recording interface shown in FIG. 11, a control 1103 is the music setting control. The user triggers the control 1103, and the electronic device displays the use cancellation control in response to the trigger operation of the user, such that the user can no longer use the background music of the first video during the recording process of the second video. It should be noted that in the video recording interface shown in FIG. 12, FIG. 13, or FIG. 15, a form of the music setting control is the same as a form of the music setting control in the video recording interface shown in FIG. 11, details of which are not repeated herein.

The music setting control is provided in the video recording interface, such that the user can trigger the music setting control to cancel the use the background music of the first video during the recording process of the second video, improving the flexibility of the video processing.

In the case that a duration of the background music of the first video is less than the recording duration of the second video, the background music of the first video is looped. The background music of the first video is looped in the case that the duration of the background music is less than the recording duration of the second video, which improves the intelligence of the video processing, ensures that there is background music during the entire recording process of the second video, and improves a recording effect of the second video.

In the case that the user's recording process meets a specific condition, the electronic device can acquire the second video recorded by the user, and then automatically process the first video and the second video to acquire the target video. The following describes two ways to trigger acquiring the target video by the electronic device.

In some embodiments, the electronic device displays a recording completion control in response to the recording duration of the second video reaching a second target duration, and displays a video editing interface in response to a trigger operation on the recording completion control. The video editing interface includes an edit control for editing the video, such that the user can further process the target video through the video editing interface. The second target duration is any duration, which is not limited in the embodiments of the present disclosure. For example, the second target duration is 2 seconds. Still taking the interface shown in FIG. 20 as an example, in the interface shown in FIG. 20, a "Next" button 2002 is the recording completion control. It should be noted that in the interface shown in FIG. 21 or FIG. 22, a form of the recording completion control is the same as a form of the recording completion control in the interface shown in FIG. 20, details of which are not repeated herein.

In some other embodiments, the electronic device displays the video editing interface in response to the recording duration of the second video reaching a third target duration, such that the user can further process the first video and the second video in the target video through the video editing interface. The third target duration is any duration greater than the second target duration. A specific value of the third target duration is not limited in the embodiments of the present disclosure.

The two ways of displaying the video editing interface are provided, which improves the flexibility of the video processing. In addition, the user can further edit the first video and the second video in the target video through the video editing interface to perform beautifying of the target video, which improves the quality of the target video.

The video editing interface is configured to provide a video editing function, such that the user can edit the first video and the second video in the target video through the video editing interface. The following describes two possible display forms of the video editing interface.

In a first possible display form of the video editing interface, in the case that the electronic device displays the video editing interface, the first video is played in the video editing interface. The video editing interface includes a first switching control. The user can switch the currently played video through the first switching control. The electronic device plays the second video in the video editing interface in response to a trigger operation on the first switching control. In the case that the user switches the video played in the video editing interface to the second video, the first switching control is correspondingly replaced with a second switching control, such that the user can switch the currently played video back to the first video through the second switching control.

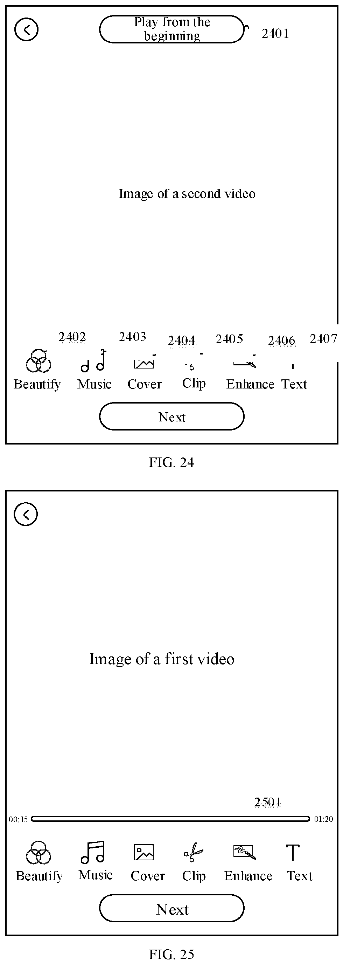

Referring to FIG. 23, FIG. 23 is a schematic interface diagram of a video editing interface according to an exemplary embodiment. A video played in the interface shown in FIG. 23 is the first video. In the interface shown in FIG. 23, a "Play from the video chain" button 2301 is the first switching control. The user triggers the "Play from the video chain" button 2301, and the electronic device displays an interface shown in FIG. 24 in response to the trigger operation. Referring to FIG. 24, FIG. 24 is a schematic interface diagram of a video editing interface according to an exemplary embodiment. The video played in the interface shown in FIG. 24 is the second video. In the interface shown in FIG. 24, a "Play from the beginning" button 2401 is the second switching control. The user triggers the "Play from the beginning" button 2401, and the electronic device displays the interface shown in FIG. 23 in response to the trigger operation.

Different switching controls are provided in the video editing interface for playing different videos, such that the user can switch a to-be-processed video in the video editing interface through the switching controls, improving the flexibility of the video processing.

In a second possible display form of the video editing interface, the video editing interface includes a progress display control, wherein the progress display control is configured to adjust playing progress of the target video.

Referring to FIG. 25, FIG. 25 is a schematic interface diagram of a video editing interface according to an exemplary embodiment. In the interface shown in FIG. 25, a progress bar 2501 is the progress display control. The user can operate on the progress bar 2501 to adjust the progress of the video played in the video editing interface.

The progress display control is provided in the video editing interface, such that the user can adjust the playing progress of the target video through the progress display control to preview the target video, improving the flexibility of the video processing.

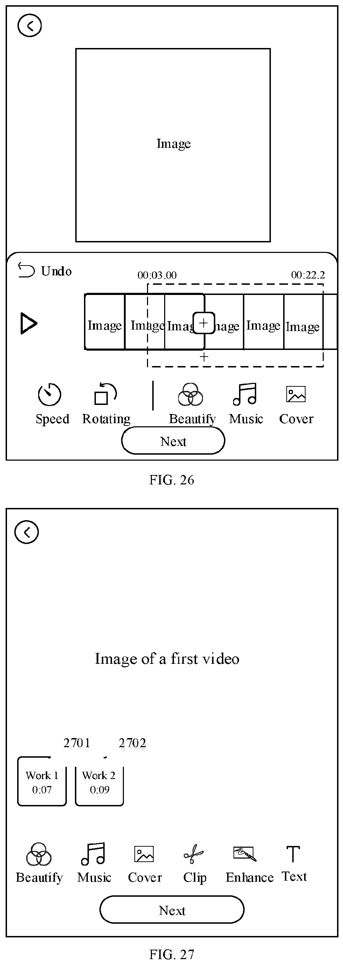

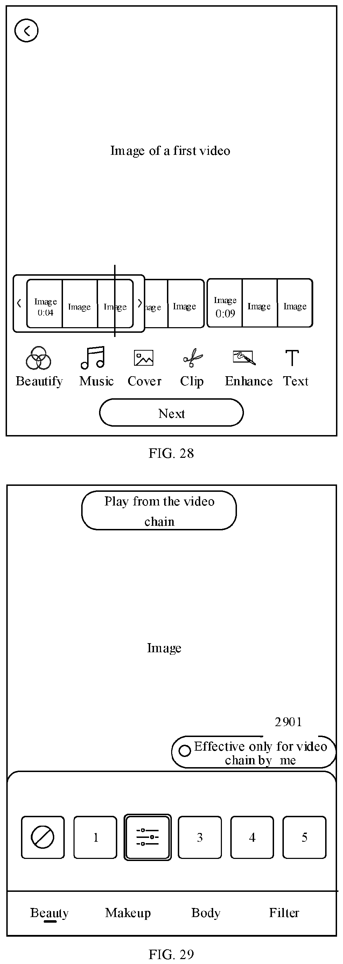

The above are merely two exemplary display forms of the video editing interface. In some embodiments, the video editing interface may be of other types. Referring to FIG. 26 and FIG. 27, both FIG. 26 and FIG. 27 are schematic interface diagrams of video editing interfaces. The interface shown in FIG. 27 displays only a first video frame 2701 in the first video and a second video frame 2702 in the second video. In the case that the user triggers the first video frame 2701 in the first video and the second video frame 2702 in the second video, the video frames in the first video and video frames in the second video are displayed in the video editing interface shown in FIG. 28. In some other embodiments, the video editing interface may be of more types, which is not limited in the embodiments of the present disclosure.

Regardless of the display form of the video editing interface, the video editing interface includes a plurality of controls for editing the video, such as an image processing control, a music adding control, a cover setting control, a clip control, an image quality adjusting control, and a text adding control, such that the user can edit the video through the plurality of controls to acquire a more satisfactory target video.

Still taking the video editing interface shown in FIG. 24 as an example, in the interface shown in FIG. 24, a "Beautify" button 2402 is the image processing control, a "Music" button 2403 is the music adding control, a "Cover" button 2404 is the cover setting control, a "Clip" button 2405 is the clip control, an "Enhance" button 2406 is the image quality adjusting control, and a "Text" button 2407 is the text adding control.

The following respectively describes the image processing control, music adding control, cover setting control, and clip control. In the following description, a process after these controls are triggered on the editing interface shown in FIG. 24 is taken as an example for description.

(1) In the case that the user triggers the image processing control, the electronic device displays an image processing interface in response to the user's trigger operation on the image processing control, such that the user can process each of the video frames in the first video in the target video through the image processing interface.

Referring to FIG. 29, FIG. 29 is a schematic interface diagram of an image processing interface according to an exemplary embodiment. In combination with the video editing interface shown in FIG. 24, in the case that the user triggers the "Beautify" button 2402 in the video editing interface shown in FIG. 24, the electronic device displays the interface shown in FIG. 29 in response to the trigger operation of the user, such that the user can process each of the video frames in the target video through the image processing interface shown in FIG. 29.

The image processing interface includes a first setting control, and the user can select the first setting control to set an operation performed on the image processing interface to be effective only for the second video, which improves the flexibility of the video processing. An "Effective only for video chain by me" button 2901 shown in FIG. 29 is the first setting control.

(2) In the case that the user triggers the music setting control, the electronic device displays a music setting interface in response to the user's trigger operation on the music setting control, such that the user can set background music of the target video through the music setting interface.

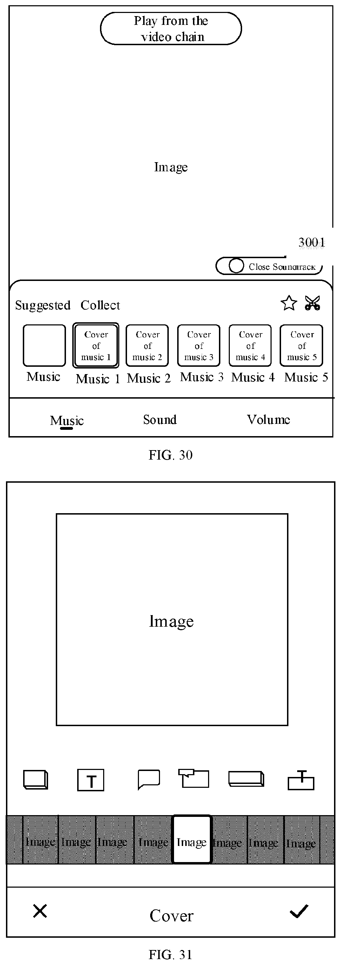

Referring to FIG. 30, FIG. 30 is a schematic interface diagram of a music setting interface according to an exemplary embodiment. In combination with the video editing interface shown in FIG. 24, in the case that the user triggers the "Music" button 2403 in the video editing interface shown in FIG. 24, the electronic device displays the interface shown in FIG. 30 in response to the trigger operation of the user, such that the user can set the background music of the target video through the music setting interface shown in FIG. 30.

The music setting interface includes a second set control, and the user can select the second set control to not use the background music of the first video as the background music of the target video and can select background music based on his/her preferences, which improves the flexibility of the video processing. Referring to FIG. 30, a "Close Soundtrack" button 3001 shown in FIG. 30 is the second set control.

(3) In the case that the user triggers the cover setting control, the electronic device displays a cover setting interface in response to the user's trigger operation on the cover setting control, such that the user can set a cover of the target video in the cover setting interface.

Referring to FIG. 31, FIG. 31 is a schematic interface diagram of a cover setting interface according to an exemplary embodiment. In combination with the video editing interface shown in FIG. 24, in the case that the user triggers the "Cover" button 2404 in the video editing interface shown in FIG. 24, the electronic device displays the interface shown in FIG. 31 in response to the trigger operation of the user, such that the user can set the cover of the target video through the cover setting interface shown in FIG. 31.

(4) In the case that the user triggers the clip control, the electronic device displays a video clipping interface in response to the user's trigger operation on the clip control. The video clipping interface is configured to display the video frames in the target video, such that the user can clip the target video through the video clipping interface. In the case that the video clipping interface displays the video frames in the target video, the video frames in the first video and the video frames in the second video are distinguishingly displayed.

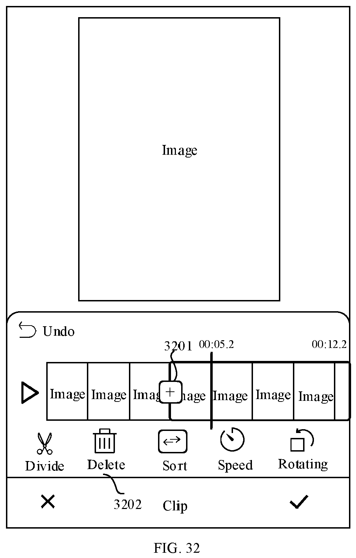

Referring to FIG. 32, FIG. 32 is a schematic interface diagram of a video clipping interface according to an exemplary embodiment. In combination with the video editing interface shown in FIG. 24, in the case that the user triggers the "Clip" button 2405 in the video editing interface shown in FIG. 24, the electronic device displays the interface shown in FIG. 32 in response to the trigger operation of the user, such that the user can clip the target video through the video clipping interface shown in FIG. 32. Referring to FIG. 32, a control 3201 in FIG. 32 is used to distinguish the video frames in the first video and the video frames in the second video. Video frames located on the left of the control 3201 are the video frames in the first video and the video frames located on the right of the control 3201 are the video frames in the second video.

The video frames in the first video and the video frames in the second video are distinguishing displayed in the video clipping interface, such that the user can clearly distinguish the content of video uploaded or recorded by himself/herselfand content of the original video, improving the intelligence of the video processing.

The video cropping interface includes a delete control, and the user can delete a video frame in the target video through the delete control. Referring to FIG. 32, in the video cropping interface shown in FIG. 32, a "Delete" button 3202 is the delete control.

In some embodiments, in the case that a clip operation is performed on the video clipping interface, and a video clip corresponding to the clip operation includes all video frames in the first video, the electronic device displays first prompt information, wherein the first prompt information is configured to prompt that all video frames in the first video cannot be deleted. For example, the first prompt information is "The original work cannot be deleted completely", or the first prompt information is of another type, which is not limited in the embodiments of the present disclosure.

In the case that a clip operation is performed on the video clipping interface, and the video clip corresponding to the clip operation includes all video frames in the second video, the electronic device displays second prompt information, wherein the second prompt information is configured to prompt that all video frames in the second video cannot be deleted. For example, the second prompt information is "The video chain cannot be deleted completely," or the second prompt information is of another type, which is not limited in the embodiments of the present disclosure.

That the clip operation is performed on the video clipping interface means that the user triggers the delete control.

The corresponding prompt information is displayed in the case that the user wants to delete all video frames in the first video or all video frames in the second video, which enables the user to adjust his/her operation in time, improves the intelligence of the video processing, and ensures that the target video finally acquired is a video stitched by different videos.

In S308, the electronic device publishes the target video.

The video editing interface further includes an editing completion control. The user can enter a publishing process of the target video through the editing completion control. In some embodiments, the user triggers the editing completion control, and the electronic device displays a publishing interface in response to the trigger operation on the editing completion control. The user performs a publishing operation on the publishing interface, and the electronic device publishes the target video in response to the publishing operation on the publishing interface.

The editing completion control is provided in the video editing interface, such that the user can enter the publishing interface by triggering the editing completion control, and the user can perform the publishing operation on the publishing interface to publish the target video. The operation is simple, and the man-machine interaction efficiency is high.

For publishing the target video, the electronic device acquires publishing setting information of the target video and publishes the target video based on the publishing setting information in response to the publishing operation on the publishing interface.

The publishing setting information is acquired through an information setting interface. In some embodiments, the electronic device displays the information setting interface, and the user sets the publishing setting information of the target video in the information setting interface. The information setting interface further includes a setting completion control. After completing the setting, the user triggers the setting completion control. The electronic device acquires the publishing setting information set by the user in response to the trigger operation on the setting completion control.

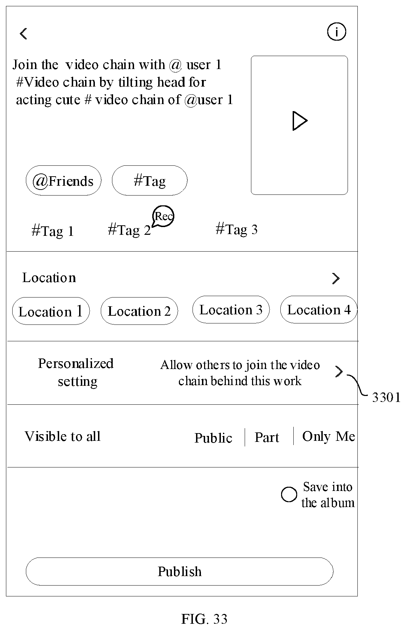

The information setting interface refers to FIG. 33. FIG. 33 is a schematic interface diagram of an information setting interface according to an exemplary embodiment. The user can set the publishing setting information of the target video through the information setting interface shown in FIG. 33.

The target video is published based on the publishing setting information, which makes the publishing of the target video better meet the user's demand and increases the flexibility of the video processing.

The publishing setting information includes target setting information. The target setting information is configured to indicate whether video stitching is allowed to be performed based on the target video. The publishing setting information further includes a publishing location, publishing copy, whether the published work is allowed to be downloaded by other users, users to which the published work is visible, and the like, which is not limited in the embodiments of the present disclosure.

A process of acquiring the target setting information includes: The information setting interface includes a target setting control, the user triggers the target setting control, and the electronic device displays a target setting interface in response to the trigger operation on the target setting control, wherein the target setting interface includes a setting control for the target setting information, such that the user can set the target setting information through the setting control for the target setting information.

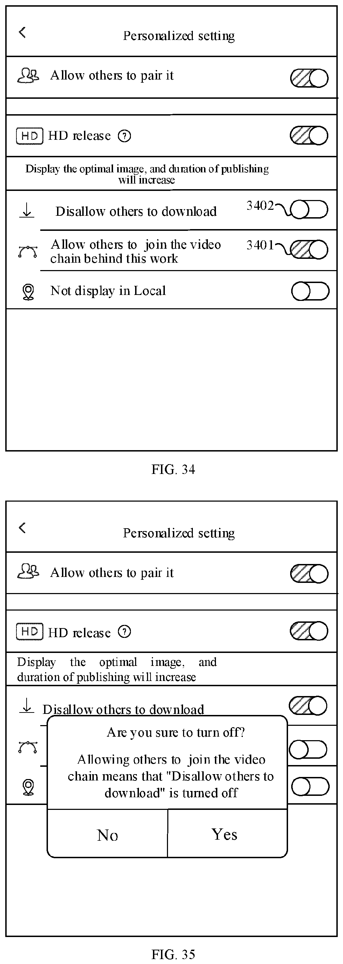

Still taking the information setting interface shown in FIG. 33 as an example, a "Personalized setting" portal 3301 in the information setting interface shown in FIG. 33 is the target setting control. In the case that the user triggers the "Personalized setting" portal 3301, the target setting interface shown in FIG. 34 is displayed, such that the user can set the target setting information in the target setting interface. Referring to FIG. 34, a switch button 3401 corresponding to a text "Allow others to join the video chain behind this work" in FIG. 34 is the setting control for the target setting information. There are two optional states for the setting control. In the case that the setting control is in a form of the switch button 3401 in the figure, the setting control is in an on state; and in the case that the setting control is in a form of a switch button 3402 in the figure, the setting control is in an off state.

In some embodiments, the switch button corresponding to the text "Allow others to join the video chain behind this work" and a switch button corresponding to text "Disallow others to download" cannot be in the on state simultaneously. In the case that both switches are in the on state, the electronic device displays fifth prompt information, wherein the fifth prompt information is configured to prompt the user to adjust the status of the switch button corresponding to the text "Allow others to join the video chain behind this work" or the status of the switch button corresponding the text "Disallow others to download ". Referring to FIG. 35, FIG. 35 is a schematic diagram of a display form of fifth prompt information according to an exemplary embodiment.

In some embodiments, in the case that the target video is published successfully, the electronic device displays the target video and a tag of the target video in the list display interface of the published videos, wherein the tag is configured to indicate that the target video is a video acquired by stitching the published videos. The work display interface refers to FIG. 6, and the tag is the same as the tag of the published video 3 in FIG. 6, details of which are not repeated herein again.

After the target video is published, the target video and the tag of the target video are displayed in the list display interface of the published videos, which enables the user to determine that the target video is a video acquired by stitching the published videos based on the tag, and increases the amount of information contained in the video processing.

The user can view the target video published by himself/herself by triggering the target video displayed in the work display interface. The electronic device displays the play interface corresponding to the target video in response to the user's trigger operation on the target video. The target video is played in the play interface corresponding to the target video.

The play interface corresponding to the target video includes a share control. The user can invite other users to participate in the video stitching by triggering the share control. The user triggers the share control, and the electronic device sends first notification information in response to a trigger operation on the share control, wherein the first notification information is configured to invite a user to participate in the video stitching.

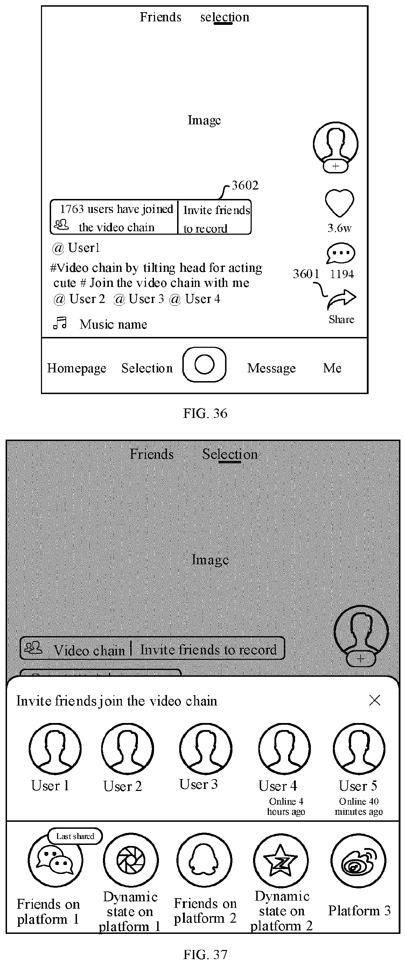

Referring to FIG. 36, FIG. 36 is a schematic interface diagram of a play interface corresponding to a target video according to an exemplary embodiment. A "Share" button 3601 in FIG. 36 is the share control. The user can invite other users to participate in the video stitching by triggering the "Share" button 3601.

A sharing function is provided by providing the share control in the first play interface corresponding to the target video, which enables the user to send the first notification information to other users to invite the other users to participate in the video stitching, and increases the flexibility of the video processing.

The play interface corresponding to the target video further includes a participate control. The participate control includes the first participate control. The user can invite other users to participate in the video stitching by triggering the participate control. The user triggers the first participate control, and the electronic device sends first notification information to trigger inviting other users to participate in the video stitching in response to the trigger operation on the first participate control, wherein the first notification information is configured to invite the other users to participate in the video stitching.

Still taking the play interface corresponding to the target video shown in FIG. 36 as an example, an "Invite friends to record" button 3602 in FIG. 36 is the first participate control. The user can invite other users to participate in the video stitching by triggering the "Invite friends to record" button 3602.

Referring to FIG. 37, FIG. 37 is a schematic interface diagram of a sharing interface according to an exemplary embodiment. In combination with the interface shown in FIG. 36, in the case that the user triggers the "Share" button 3601 or "Invite friends to record" button 3602 in the interface shown in FIG. 36, the electronic device displays the sharing interface shown in FIG. 37 in response to the trigger operation of the user, such that the user can select a user or a platform through the sharing interface to invite other users to participate in the video stitching.

In some embodiments, in the case that the invited user performs video chain based on the target video, after the invited user publishes the video chain, the electronic device can acquire information that the invited user has performed the video chain based on the target video, and then the electronic device displays second notification information, wherein the second notification information is configured to notify that a user performs the video stitching based on the target video.

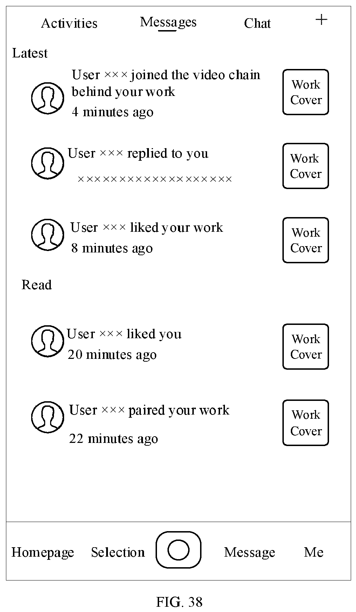

Referring to FIG. 38, FIG. 38 is a schematic diagram of a display form of second notification information according to an exemplary embodiment. "User ××× has joined the video chain behind your work" in FIG. 38 is the second notification information.

The second notification information is displayed in the case that other user participates in the video stitching based on the target video published by the current user, such that the current user can be notified in time that there is other user who performs the video stitching based on the target video published by himself/herself. This increases the amount of information contained in the video processing.

The second notification information includes a user avatar, copy, and a work cover. In the case that the user triggers the copy or work cover, the electronic device displays the interface shown in FIG. 7 in response to the user's trigger operation, such that the user can view the video published by the user who received the first notification information. In the case that the user triggers the user avatar, the electronic device displays a personal homepage of the user who received the first notification information in response to the user's trigger operation.

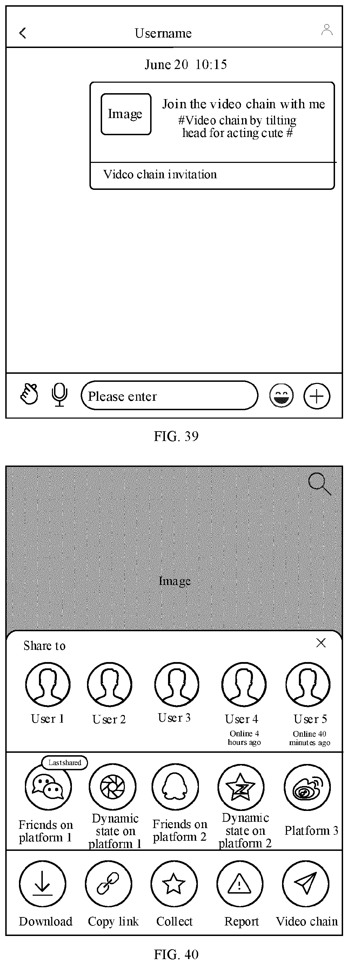

In some embodiments, the electronic device can also receive first notification information sent by another user, and then display the first notification information. Referring to FIG. 39, FIG. 39 is a schematic diagram of a display form of first notification information according to an exemplary embodiment. The user can view a video published by another user by triggering the first notification information, and then determine whether to participate in the video chain.

After the user triggers the first notification information, the interface in which the user can view the video published by another user refers to FIG. 7. In the case that the user determines to participate in the video chain, the user triggers the "I want to record" button 7012 in FIG. 7 to participate in the video stitching. Alternatively, the user triggers a "Share" button 703 in FIG. 7, and the electronic device displays a sharing interface shown in FIG. 40 in response to the trigger operation on the "Share" button 703. The sharing interface includes a "Video chain" portal. The user can also participate in the video stitching through the "Video chain" portal.

It should be noted that after the user publishes the target video, other users can view the target video on the list display interface of the published videos. In the case that the user triggers the target video, the electronic device displays the play interface corresponding to the target video in response to the user's trigger operation on the target video. The play interface corresponding to the target video is the same as that in FIG. 7, details of which are not repeated herein.

In the solutions provided in the embodiments of the present disclosure, a function through which a user can select a target video frame by himself/herself is provided, such that the user can select a stitching joint for video stitching by himself/herself, and then a target video is acquired by stitching a clip of a first video and a second video based on the target video frame selected by the user, enriching video processing methods and improving flexibility and intelligence of video processing. The user can freely select the target video frame which serves as the joint for the video stitching using the method for processing videos provided in the present disclosure, to perform video stitching with high selectivity. The user can also set the background music of the target video and crop the target video based on his/her preferences by himself/herself, which increases the possibility and expandability of the video processing, thereby giving the user more room to play and improving user experience.

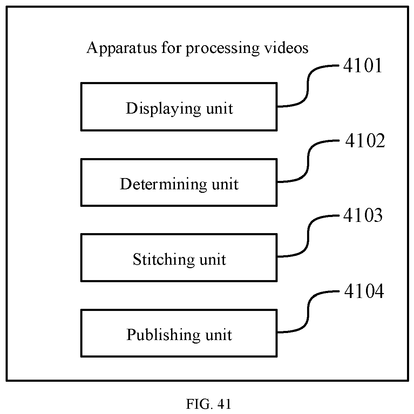

FIG. 41 is a block diagram of an apparatus for processing videos according to an exemplary embodiment. Referring to FIG. 41, the apparatus includes: a displaying unit 4101, configured to display video frames in a first video based on a video recording interface in response to a participation instruction for video stitching; a determining unit 4102, configured to determine a selected target video frame in response to a selection operation on any of the video frames; a stitching unit 4103, configured to determine an insertion position of a second video based on the target video frame, and acquire a target video by stitching the second video and the first video based on the insertion position; and a publishing unit 4104, configured to publish the target video.

The apparatus provided by the embodiments of the present disclosure, a function through which a user can select a target video frame by himself/herself is provided, such that the user can select a stitching joint for video stitching by himself/herself, and then a target video is acquired by stitching a clip of a first video and a second video based on the target video frame selected by the user, enriching video processing methods and improving flexibility and intelligence of video processing.

In some embodiments, the displaying unit 4101 is configured to perform any one of: displaying each of the video frames in the first video based on the video recording interface; and displaying a candidate video frame in the first video based on the video recording interface, wherein the first video includes a plurality of stitched videos, and the candidate video frame is any video frame in each of the stitched videos in the first video.

In some embodiments, the stitching unit 4103 is configured to: in the case that each of the video frames in the first video is displayed in the video recording interface, determine the target video frame as the insertion position, crop the first video based on the target video frame, and acquire the target video by stitching the second video behind the cropped first video.

In some embodiments, the stitching unit 4103 is configured to: in the case that the candidate video frame in the first video is displayed in the video recording interface, determine a start video frame of the stitched video corresponding to the target video frame as the insertion position, and insert the second video in front of the target video frame; and the stitching unit 4103 is further configured to: in the case that the candidate video frame in the first video is displayed in the video recording interface, determine an end video frame of the stitched video corresponding to the target video frame as the insertion position, and insert the second video behind the target video frame.

In some embodiments, the displaying unit 4101 is configured to display a first video frame in the first video in the video recording interface, wherein the first video frame is any video frame in the first video; and display the video frames in the first video in the video recording interface in response to a trigger operation on the first video frame.

In some embodiments, the displaying unit 4101 is configured to display a first video frame in the first video in the video recording interface, wherein the first video frame is any video frame in the first video; display a video frame display interface in response to the trigger operation on the first video frame; and display the video frames in the first video in the video frame display interface.

In some embodiments, the displaying unit 4101 is further configured to display operation guide information, wherein the operation guide information is configured to guide the user to participate in the video stitching.

In some embodiments, the displaying unit 4101 is further configured to: cancel a display of the operation guide information in the case that a display duration of the operation guide information reaches a first target duration; and the displaying unit 4101 is further configured to cancel a display of the operation guide information in response to a trigger operation on any position.

In some embodiments, the displaying unit 4101 is further configured to display a sliding window on the video frames in the first video; and the determining unit 4102 is further configured to determine, in response to a drag operation on the sliding window, a video frame in the sliding window at an end of the drag operation as the target video frame.

In some embodiments, a floating window is displayed in the video recording interface, wherein the floating window is configured to play the first video; and the displaying unit 4101 is further configured to display a playing progress identifier on the video frame in the first video, wherein the playing progress identifier is configured to indicate a video frame being played currently in the first video.

In some embodiments, a video selection control is displayed in the video recording interface; the displaying unit 4101 is further configured to display at least one candidate video in response to a trigger operation on the video selection control; and the determining unit 4102 is further configured to determine a selected candidate video as the second video.

In some embodiments, a video recording control is displayed in the video recording interface; the apparatus further includes: a recording unit, configured to record the second video in response to a trigger operation on the video recording control.

In some embodiments, the recording unit is configured to acquire at least one of background music and special effect information of the first video, and record the second video based on at least one of the background music and special effect information of the first video.

In some embodiments, in the case that a duration of the background music of the first video is less than a recording duration of the second video, the background music of the first video is looped.

In some embodiments, a music setting control is further displayed in the video recording interface; the displaying unit 4101 is further configured to display a use cancellation control in response to a trigger operation on the music setting control; and the recording unit is further configured to cancel, in response to a trigger operation on the use cancellation control, a use of the background music of the first video in the case that the second video is recorded.

In some embodiments, the recording unit is configured to display a countdown in response to the trigger operation on the video recording control, and record the second video at the end of the countdown.

In some embodiments, a floating window is displayed in the video recording interface, wherein the floating window is configured to play the first video; and the apparatus further includes: a playing unit, configured to play a video clip whose duration is matched with the duration of the countdown in the floating window during the countdown, wherein the video clip is a video clip located in front of the target video frame in the first video.

In some embodiments, the displaying unit 4101 is further configured to cancel a display of the floating window at the end of the countdown.

In some embodiments, the displaying unit 4101 is further configured to display, in response to a move operation on the floating window, the floating window at a position that corresponds to an end position of the move operation.

In some embodiments, a fold control is displayed in the floating window; and the displaying unit 4101 is further configured to display the floating window in a folded form in response to a trigger operation on the fold control.

In some embodiments, the displaying unit 4101 is further configured to cancel a display of the first video frame in the first video in response to the trigger operation on the video recording control, wherein the first video frame is any of the video frames in the first video.

In some embodiments, the displaying unit 4101 is further configured to display a recording pause control at the end of the countdown; and the displaying unit 4101 is further configured to display the first video frame in the first video and a second video frame in the second video in response to a trigger operation on the recording pause control, wherein the first video frame is any of the video frames in the first video, and the second video frame is any of video frames in the second video.

In some embodiments, the displaying unit 4101 is further configured to display a delete control in response to the trigger operation on the recording pause control; and the apparatus further includes: a deleting unit, configured to delete, in response to a trigger operation on the delete control, a video clip recorded after the recording pause control is triggered last time from the second video.

In some embodiments, the displaying unit 4101 is further configured to display a recording completion control in response to the recording duration of the second video reaching a second target duration, and display a video editing interface of the target video in response to a trigger operation on the recording completion control, wherein the video editing interface includes an edit control for editing the first video and the second video in the target video; and the displaying unit 4101 is further configured to display the video editing interface of the target video in response to the recording duration of the second video reaching a third target duration.

In some embodiments, the edit control includes a clip control; and the displaying unit 4101 is further configured to display a video clipping interface of the target video in response to a trigger operation on the clip control, wherein the video clipping interface is configured to display video frames in the first video and the second video in the target video, wherein in the case that the video clipping interface displays the video frames in the target video, the video frames in the first video and the video frames in the second video are distinguishingly displayed.

In some embodiments, the displaying unit 4101 is further configured to: in the case that a clip operation is performed in the video clipping interface, and a video clip corresponding to the clip operation includes all video frames in the first video, display first prompt information, wherein the first prompt information is configured to prompt that all video frames in the first video cannot be deleted; and the displaying unit 4101 is further configured to: in the case that a clip operation is performed in the video clipping interface, and a video clip corresponding to the clip operation includes all video frames in the second video, display second prompt information, wherein the second prompt information is configured to prompt that it is not allowed to delete all video frames in the second video.

In some embodiments, the video editing interface further includes a progress display control, wherein the progress display control is configured to adjust playing progress of the target video.

In some embodiments, the video editing interface further includes an editing completion control; and the publishing unit includes a displaying subunit and a publishing subunit; wherein the displaying subunit is configured to display a publishing interface in response to a trigger operation on the editing completion control; and the publishing subunit is configured to publish the target video in response to a publishing operation on the publishing interface.

In some embodiments, the publishing subunit is configured to acquire publishing setting information of the target video, wherein the publishing setting information includes target setting information, the target setting information being configured to indicate whether video stitching is allowed to be performed based on the target video; and publish the target video based on the publishing setting information in response to the publishing operation on the publishing interface.

In some embodiments, the apparatus further includes: a clipping unit, configured to: in the case that a duration of the target video exceeds a predetermined duration, acquire a video whose duration is matched with the predetermined duration by clipping the target video.

In some embodiments, the displaying unit 4101 is further configured to display the target video and a tag of the target video, wherein the tag is configured to indicate that the target video is a video acquired by stitching the published videos.

In some embodiments, the displaying unit 4101 is further configured to display a play interface corresponding to the target video, wherein the play interface corresponding to the target video includes a share control; and the apparatus further includes: a sending unit, configured to send first notification information in response to a trigger operation on the share control, wherein the first notification information is configured to invite a user to participate in the video stitching.

In some embodiments, the displaying unit 4101 is further configured to display a play interface corresponding to the target video, wherein the play interface corresponding to the target video includes a participate control for the video stitching; and the apparatus further includes: a participating unit, configured to participate in the video stitching in response to a trigger operation on the participate control.

In some embodiments, the participate control includes a first participate control and a second participate control; the participation unit is configured to trigger to invite the user to participate in the video stitching in response to a trigger operation on the first participate control; and the participating unit is further configured to trigger the participation instruction for video stitching in response to a trigger operation on the second participate control.

In some embodiments, the play interface corresponding to the target video further includes a video viewing portal; and the displaying unit 4101 is further configured to display a play interface corresponding to the first video in response to a trigger operation on the video viewing portal.

In some embodiments, the play interface corresponding to the target video includes video stitching information. The video stitching information includes any one of: in the case that an associated user participates in the video stitching, the video stitching information is first information, wherein the first information is configured to indicate that an associated user participates in the video stitching; in the case that a number of users participating in the video stitching reaches a target threshold, the video stitching information is second information, wherein the second information is configured to indicate the number of users participating in the video stitching; and in the case that no associated user participates in the video stitching, and the number of users participating in the video stitching does not reach the target threshold, the video stitching information is third information, wherein the third information is configured to indicate that the played video is acquired by stitching the published videos; wherein the associated user is a user associated with a user who triggers the participation instruction for video stitching.

In some embodiments, the displaying unit 4101 is further configured to display a video display interface in response to a trigger operation on the video stitching information, wherein the video display interface is configured to display a video published based on video stitching.

In some embodiments, the displaying unit 4101 is further configured to display at least one video; the displaying unit 4101 is further configured to display a participation interface in response to a trigger operation on the first video in the at least one video, wherein the participation interface is configured to play the first video and includes a video making control; and the apparatus further includes: a triggering unit, configured to trigger the participation instruction for video stitching in response to a trigger operation on the video making control.

In some embodiments, the displaying unit 4101 is further configured to display second notification information, wherein the second notification information is configured to notify that a user performs video stitching based on the target video.

For the apparatus in the above embodiment, specific manners of operations performed by the modules in the apparatus have been described in detail in the embodiments of the related method, and details are not described herein again.

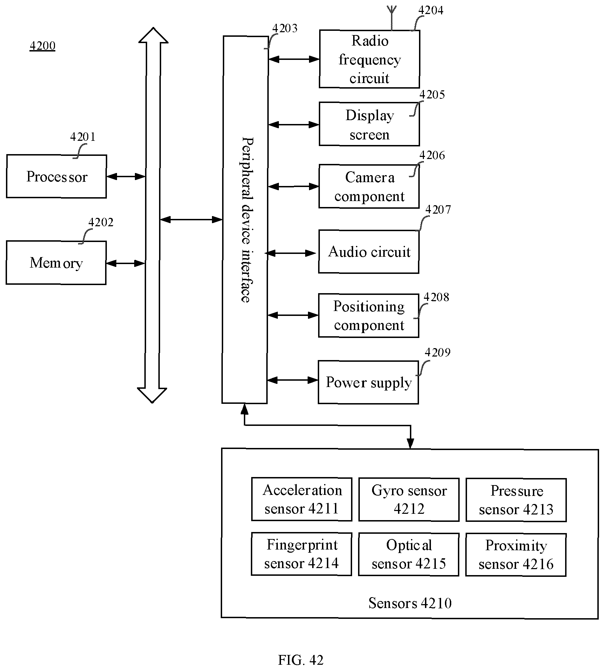

FIG. 42 is a block diagram of an electronic device according to an exemplary embodiment. An electronic device 4200 may also be referred to as user equipment, a portable terminal, a laptop terminal, a desktop terminal, or the like.

Generally, the electronic device 4200 includes one or more processors 4201 and one or more memories 4202.

The processor 4201 may include one or more processing cores, for example, a four-core processor or an eight-core processor. The processor 4201 may be implemented by at least one hardware of digital signal processing (DSP), a field-programmable gate array (FPGA), and a programmable logic array (PLA). Alternatively, the processor 4201 may include a main processor and a coprocessor. The main processor is configured to process data in an awake state, and is also referred to as a central processing unit (CPU). The coprocessor is a low-power-consumption processor configured to process data in a standby state. In some embodiments, the processor 4201 may be integrated with a graphics processing unit (GPU). The GPU is configured to be responsible for rendering and drawing content that a display screen needs to display. In some embodiments, the processor 4201 may further include an artificial intelligence (AI) processor. The AI processor is configured to process computational operations related to machine learning.

The memory 4202 may include one or more non-transitory computer-readable storage mediums, which may be non-transitory. The memory 4202 may further include a high-speed random-access memory (RAM) and a nonvolatile memory, such as one or more magnetic disk storage devices and flash storage devices. In some embodiments, the non-transitory computer-readable storage medium in the memory 4202 is configured to store at least one program code. The at least one program code, when executed by the processor 4201, causes to perform the method for processing videos as described in the method embodiments of the present disclosure.

In some embodiments, the electronic device 4200 may further optionally include a peripheral device interface 4203 and at least one peripheral device. The processor 4201, the memory 4202, and the peripheral device interface 4203 may be connected via a bus or a signal line. Each peripheral device may be connected to the peripheral device interface 4203 via a bus, a signal line, or a circuit board. In some embodiments, the peripheral device includes at least one of a radio frequency circuit 4204, a display screen 4205, a camera assembly 4206, an audio circuit 4207, a positioning assembly 4208, and a power supply 4209.

The peripheral device interface 4203 may be configured to connect at least one peripheral device related to an input/output (I/O) to the processor 4201 and the memory 4202. In some embodiments, the processor 4201, the memory 4202, and the peripheral device interface 4203 are integrated on a same chip or circuit board. In some other embodiments, any one or two of the processor 4201, the memory 4202, and the peripheral device interface 4203 may be implemented on a separate chip or circuit board, which is not limited in this embodiment.

The radio frequency circuit 4204 is configured to receive and transmit a radio frequency (RF) signal, which is also referred to as an electromagnetic signal. The radio frequency circuit 4204 may communicate with a communications network and other communications devices via the electromagnetic signal. The radio frequency circuit 4204 may convert an electrical signal into an electromagnetic signal for transmission, or convert a received electromagnetic signal into an electrical signal. Optionally, the radio frequency circuit 4204 includes an antenna system, a radio frequency transceiver, one or more amplifiers, a tuner, an oscillator, a digital signal processor, a codec chipset, a subscriber identity module card, and the like. The radio frequency circuit 4204 communicates with other electronic devices via at least one wireless communication protocol. The wireless communication protocol includes but is not limited to a metropolitan area network, various generations of mobile communication networks (2G, 3G, 4G, and 5G), a wireless local area network, and/or a wireless fidelity (Wi-Fi) network. In some embodiments, the radio frequency circuit 4204 may further include a near field communication (NFC) related circuit, which is not limited in the present disclosure.

The display screen 4205 is configured to display a user interface (UI). The UI may include a graph, text, an icon, a video, and any combination thereof. In the case that the display screen 4205 is a touch display screen, the display screen 4205 is further capable of acquiring a touch signal on or over a surface of the display screen 4205. The touch signal may be input into the processor 4201 as a control signal for processing. In this case, the display screen 4205 may be further configured to provide a virtual button and/or a virtual keyboard, which is/are also referred to as a soft button and/or a soft keyboard. In some embodiments, one display screen 4205 is disposed on a front panel of the electronic device 4200. In some other embodiments, at least two display screens 4205 are disposed on different surfaces of the electronic device 4200 or in a folded design. In some other embodiments, the display screen 4205 may be a flexible display screen disposed on a bending or folded surface of the electronic device 4200. Moreover, the display screen 4205 may have an irregular shape other than a rectangle, namely, an irregularly-shaped screen. The display screen 4205 may be made from materials such as a liquid crystal display (LCD) and an organic light-emitting diode (OLED).

The camera assembly 4206 is configured to capture an image or a video. Optionally, the camera assembly 4206 includes a front camera and a rear camera. Generally, the front camera is disposed on a front panel of the electronic device, and the rear camera is disposed on the back surface of the electronic device. In some embodiments, at least two rear cameras are disposed, each of which is at least one of a main camera, a depth-of-field camera, a wide-angle camera, and a telephoto camera, to achieve a background blurring function by fusion of the main camera and the depth-of-field camera, panoramic shooting and virtual reality (VR) shooting functions by fusion of the main camera and the wide-angle camera, or other fusing shooting functions. In some embodiments, the camera assembly 4206 may further include a flashlight. The flashlight may be a monochromatic-temperature flashlight or a dichromatic-temperature flashlight. The dichromatic-temperature flashlight is a combination of a warm-light flashlight and a cold-light flashlight and may serve to compensate light at different chromatic temperatures.

The audio circuit 4207 may include a microphone and a loudspeaker. The microphone is configured to capture sound waves from users and environments, and convert the sound waves into electrical signals, which are then input into the processor 4201 for processing, or input into the radio frequency circuit 4204 for voice communication. For stereo acquisition or noise reduction, there may be a plurality of microphones disposed at different parts of the electronic device 4200. The microphone may be an array microphone or an omnidirectional acquisition type microphone. The loudspeaker is configured to convert electrical signals from the processor 4201 or the radio frequency circuit 4204 into sound waves. The loudspeaker may be a traditional thin-film loudspeaker or a piezoelectric ceramic loudspeaker. In the case that the loudspeaker is the piezoelectric ceramic speaker, the electric signals may be converted into sound waves not only human-audible sound waves, but also the sound waves which are inaudible to human beings for distance measurement and the like. In some embodiments, the audio circuit 4207 may further include a headset jack.

The positioning assembly 4208 is configured to position a current geographic location of the electronic device 4200 to implement navigation or a location-based service (LBS). The positioning component 4208 may be a positioning component based on the United States' Global Positioning System (GPS), China's BeiDou Navigation Satellite System (BDS), Russia's Global Navigation Satellite System (GLONASS), or the European Union's Galileo

Satellite Navigation System (Galileo).

The power supply 4209 is configured to supply power for various components in the electronic device 4200. The power supply 4209 may be alternating current, direct current, a disposable battery, or a rechargeable battery. In the case that the power supply 4209 includes the rechargeable battery, the rechargeable battery may support wired charging or wireless charging. The rechargeable battery may be further configured to support a fast charging technology.

In some embodiments, the electronic device 4200 further includes one or more sensors 4210. The one or more sensors 4210 include but are not limited to an acceleration sensor 4211, a gyro sensor 4212, a pressure sensor 4213, a fingerprint sensor 4214, an optical sensor 4215, and a proximity sensor 4216.

The acceleration sensor 4211 may be configured to detect magnitudes of accelerations on three coordinate axes of a coordinate system established by the electronic device 4200. For example, the acceleration sensor 4211 may be configured to detect components of a gravitational acceleration on the three coordinate axes. The processor 4201 may be configured to control, based on a gravity acceleration signal acquired by the acceleration sensor 4211, the display screen 4205 to display the user interface in a transverse view or a longitudinal view. The acceleration sensor 4211 may be further configured to acquire motion data of a game or a user.

The gyro sensor 4212 may be configured to detect a body direction and a rotation angle of the electronic device 4200. The gyro sensor 4212 may be configured to cooperate with the acceleration sensor 4211 to acquire a 3D motion of the user to the electronic device 4200. Based on the data acquired by the gyro sensor 4212, the processor 4201 may achieve the following functions: motion sensing (such as changing the UI according to a tilt operation of the user), image stabilization during shooting, game control, and inertial navigation.

The pressure sensor 4213 may be disposed on a side frame of the electronic device 4200 and/or a lower layer of the display screen 4205. In the case that the pressure sensor 4213 is disposed on the side frame of the electronic device 4200, the pressure sensor 4213 is configured to detect a holding signal of the user on the electronic device 4200. The processor 4201 performs left and right hand recognition or a shortcut operation according to the holding signal acquired by the pressure sensor 4213. In the case that the pressure sensor 4213 is disposed on the lower layer of the display screen 4205, the processor 4201 controls an operable control on the UI according to a pressure operation of the user on the display screen 4205. The operable control includes at least one of a button control, a scroll bar control, an icon control, and a menu control.

The fingerprint sensor 4214 is configured to acquire a fingerprint of a user. The processor 4201 identifies an identity of the user based on the fingerprint acquired by the fingerprint sensor 4214, or the fingerprint sensor 4214 identifies an identity of the user based on the acquired fingerprint. In the case that the identity of the user is identified as a trusted identity, the processor 4201 authorizes the user to perform a related sensitive operation. The sensitive operation includes unlocking a screen, viewing encrypted information, downloading software, paying, changing settings, and the like. The fingerprint sensor 4214 may be disposed on a front surface, a back surface, or a side surface of the electronic device 4200. With a physical button or a manufacturer's logo on the electronic device 4200, the fingerprint sensor 4214 may be integrated with the physical button or the manufacturer's logo.

The optical sensor 4215 is configured to acquire ambient light intensity. In an embodiment, the processor 4201 may be configured to control display brightness of the display screen 4205 based on the ambient light intensity acquired by the optical sensor 4215. In some embodiments, in the case that the ambient light is relatively high, the display brightness of the display screen 4205 is increased; and in the case that the ambient light is relatively low, the display luminance of the display screen 4205 is decreased. In another embodiment, the processor 4201 may be configured to dynamically adjust shooting parameters of the camera assembly 4206 based on the ambient light intensity acquired by the optical sensor 4215.

The proximity sensor 4216, also referred to as a distance sensor, is usually disposed on the front panel of the electronic device 4200. The proximity sensor 4216 is configured to acquire a distance between a user and the front surface of the electronic device 4200. In some embodiments, in response to the proximity sensor 4216 detecting that the distance between the user and the front surface of the electronic device 4200 gradually decreases, the processor 4201 controls the display screen 4205 to switch from a screen-on state to a screen-off state; and in response to the proximity sensor 4216 detecting that the distance between the user and the front surface of the electronic device 4200 gradually increases, the processor 4201 controls the display screen 4205 to switch from the screen-off state to the screen-on state.

Those skilled in the art may understand that the structure shown in FIG. 42 does not constitute a limitation to the electronic device 4200, and the electronic device may include more or fewer assemblies than those shown illustrated, or a combination of assemblies, or assemblies arranged differently.

In an exemplary embodiment, a computer-readable storage medium storing one or more instructions therein is further provided, for example, the memory 4202 storing one or more instructions. The one or more instructions, when executed by the processor 4201 of the electronic device 4200, cause the electronic device to perform the method for processing videos as described above. In some embodiments, the computer-readable storage medium may be a read-only memory (ROM), a random-access memory (RAM), a compact disc read-only memory (CD-ROM), a magnetic tape, a floppy disk, an optical data storage device, or the like.

In an exemplary embodiment, a computer program product is further provided. The computer program product includes one or more instructions therein. The one or more instructions, when executable by the processor 4201 of the electronic device 4200, cause the electronic device to perform the processes of the method for processing videos as described in the above embodiments.

It should be noted that the present disclosure is not limited to the precise structures described above and illustrated in the accompanying drawings, and that various modifications and changes can be made without departing from the scope of the present disclosure. The scope of the present disclosure is limited only by the appended claims.

All embodiments in the present disclosure can be implemented independently, and can be implemented in combination with other embodiments, which all falls within the protection scope of the present disclosure.

## Claims

1. A method for processing videos, applied to an electronic device, comprising:
displaying (201) video frames in a first video based on a video recording interface in response to a participation instruction for video stitching;
determining (202) a target video frame in response to a selection operation on any of the video frames;
determining (203; 307) an insertion position of a second video based on the target video frame, and acquiring (203; 307) a target video by stitching the second video and the first video based on the insertion position; and publishing (204; 308) the target video.

2. The method according to claim 1, wherein said displaying (201) the video frames in the first video based on the video recording interface comprises any one of:
displaying each of the video frames in the first video based on the video recording interface; and
displaying a candidate video frame in the first video based on the video recording interface, wherein the first video comprises a plurality of stitched videos, and the candidate video frame is any video frame in each of the stitched videos in the first video.

3. The method according to claim 1 or 2, wherein said determining (203; 307) the insertion position of the second video based on the target video frame, and acquiring (203; 307) the target video by stitching the second video and the first video based on the insertion position comprises any one of:
in the case that each of the video frames in the first video is displayed in the video recording interface, determining the target video frame as the insertion position, cropping the first video based on the target video frame, and acquiring the target video by inserting the second video behind the cropped first video;
in the case that a candidate video frame in the first video is displayed in the video recording interface, determining a start video frame of a stitched video corresponding to the target video frame as the insertion position, and acquiring the target video by inserting the second video in front of the target video frame, wherein the first video comprises a plurality of stitched videos, and the candidate video frame being any video frame in each of the stitched videos in the first video; and
in the case that the candidate video frame in the first video is displayed in the video recording interface, determining an end video frame of the stitched video corresponding to the target video frame as the insertion position, and acquiring the target video by inserting the second video behind the target video frame.

4. The method according to any preceding claim, wherein said displaying (201) the video frames in the first video based on the video recording interface comprises any one of:
displaying a first video frame in the first video in the video recording interface, wherein the first video frame is any video frame in the first video; and displaying the video frames in the first video in the video recording interface in response to a trigger operation on the first video frame; and
displaying a first video frame in the first video in the video recording interface, wherein the first video frame is any video frame in the first video; displaying a video frame display interface in response to a trigger operation on the first video frame; and displaying the video frames in the first video in the video frame display interface.

5. The method according to any preceding claim, wherein said determining (202) the target video frame in response to the selection operation on the any of the video frames comprises:
displaying a sliding window on the video frames in the first video; and
determining, in response to a drag operation on the sliding window, a video frame in the sliding window at an end of the drag operation as the target video frame.

6. The method according to any preceding claim, further comprising any one of:
in the case that a floating window configured to play the first video is displayed in the video recording interface:
displaying a playing progress identifier on the video frame in the first video, wherein the playing progress identifier is configured to indicate a video frame being played currently in the first video in the floating window;
in the case that a video selection control is displayed in the video recording interface: displaying at least one candidate video in response to a trigger operation on the video selection control, and determining a selected candidate video as the second video; and
in the case that a video recording control is displayed in the video recording interface: recording the second video in response to a trigger operation on the video recording control.

7. The method according to claim 6, wherein said recording the second video comprises:
acquiring at least one of background music and special effect information of the first video; and
recording the second video based on at least one of the background music and special effect information of the first video.

8. The method according to claim 7, wherein a music setting control is further displayed in the video recording interface; and
the method further comprises:
displaying a use cancellation control in response to a trigger operation on the music setting control; and
canceling, in response to a trigger operation on the use cancellation control, a use of the background music of the first video in the case that the second video is recorded.

9. The method according to any of claims 6 to 8, wherein the method further comprises any one of:
in the case that the floating window configured to play the first video is displayed in the video recording interface: displaying a countdown in response to the trigger operation on the video recording control; and playing a video clip whose duration is matched with a duration of the countdown in the floating window during the countdown, wherein the video clip is a video clip located in front of the target video frame in the first video;
canceling a display of a first video frame in the first video in response to the trigger operation on the video recording control, wherein the first video frame is any of the video frames in the first video;
in the case that a recording pause control is displayed in the video recording interface: displaying the first video frame in the first video and a second video frame in the second video in response to a trigger operation on the recording pause control, wherein the first video frame is airy of the video frames in the first video, and the second video frame is any of the video frames in the second video;
displaying a recording completion control in response to a recording duration of the second video reaching a second target duration, and displaying a video editing interface of the target video in response to a trigger operation on the recording completion control, wherein the video editing interface includes an edit control for editing the first video and the second video in the target video; and
displaying the video editing interface of the target video in response to the recording duration of the second video reaching a third target duration.

10. The method according to any preceding claim, further comprising any one of:
displaying the target video and a tag of the target video, wherein the tag is configured to indicate that the target video is a video acquired by stitching published videos;
displaying a play interface corresponding to the target video, wherein a share control is displayed in the play interface corresponding to the target video; and sending first notification information in response to a trigger operation on the sharing control, wherein the first notification information is configured to invite a user to participate in the video stitching; and
displaying the play interface corresponding to the target video, wherein a participate control for the video stitching is displayed in the play interface corresponding to the target video; and participating in the video stitching in response to a trigger operation on the participate control.

11. The method according to claim 10, wherein the participate control comprises a first participate control and a second participate control; and
participating in the video stitching in response to the trigger operation on the participate control comprises any one of:
triggering to invite a user to participate in the video stitching in response to a trigger operation on the first participate control; and
triggering the participation instruction for video stitching in response to a trigger operation on the second participate control.

12. The method according to claim 10 or 11, wherein the play interface corresponding to the target video further comprises a video viewing portal; and
the method further comprises:
displaying a play interface corresponding to the first video in response to a trigger operation on the video viewing portal.

13. The method according to any of claims 10 to 12, wherein the play interface corresponding to the target video comprises video stitching information, the video stitching information comprising any one of:
in the case that an associated user participates in the video stitching, the video stitching information is first information, wherein the first information is configured to indicate that an associated user participates in the video stitching;
in the case that a number of users participating in the video stitching reaches a target threshold, the video stitching information is second information, wherein the second information is configured to indicate the number of users participating in the video stitching; and
in the case that no associated user participates in the video stitching, and the number of users participating in the video stitching does not reach the target threshold, the video stitching information is third information, wherein the third information is configured to indicate that a played video is acquired by stitching the published videos;
wherein the associated user is a user associated with a user who triggers the participation instruction for video stitching.

14. An apparatus for processing videos, comprising:
a displaying unit (4101), configured to display video frames in a first video based on a video recording interface in response to a participation instruction for video stitching;
a determining unit (4102), configured to determine a target video frame in response to a selection operation on any of the video frames;
a stitching unit (4103), configured to determine an insertion position of a second video based on the target video frame, and acquire a target video by stitching the second video and the first video based on the insertion position; and
a publishing unit (4104), configured to publish the target video.

15. A non-transitory computer-readable storage medium storing one or more instructions therein, wherein the one or more instructions, when executed by a processor of an electronic device, cause the electronic device to perform:
displaying (201) video frames in a first video based on a video recording interface in response to a participation instruction for video stitching;
determining (202) a target video frame in response to a selection operation on any of the video frames;
determining (203; 307) an insertion position of a second video based on the target video frame, and acquiring (203; 307) a target video by stitching the second video and the first video based on the insertion position; and
publishing (204; 308) the target video.
